(19) **Europäisches Patentamt European Patent Office Office européen des brevets**

(11) **EP 4 611 250 A1**

(12) **EUROPEAN PATENT APPLICATION**
published in accordance with Art. 153(4) EPC

(43) Date of publication:
03.09.2025 Bulletin 2025/36

(21) Application number: 22963508.1

(22) Date of filing: 28.10.2022

(51) International Patent Classification (IPC):
*H02P 21/22* (2016.01)

(52) Cooperative Patent Classification (CPC):
H02P 21/22

(86) International application number:
PCT/JP2022/040280

(87) International publication number:
WO 2024/089861 (02.05.2024 Gazette 2024/18)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(71) Applicant: **Mitsubishi Electric Mobility Corporation**
Tokyo 100-8310 (JP)

(72) Inventors:
• **MORI, Tatsuya**
Tokyo 100-8310 (JP)

• **YAMAMOTO, Munenori**
Tokyo 100-8310 (JP)
• **TODA, Taizo**
Tokyo 100-8310 (JP)
• **NUMAKURA, Akio**
Tokyo 100-8310 (JP)
• **MATSUSHITA, Masaki**
Tokyo 100-8310 (JP)

(74) Representative: **Hoffmann Eitle**
**Patent- und Rechtsanwälte PartmbB**
**Arabellastraße 30**
**81925 München (DE)**

(54) **AC MOTOR CONTROL DEVICE AND ELECTRIC POWER STEERING DEVICE**

(57) An AC motor control device includes: a current detector; a first coordinate converter that converts pre-conversion detected currents that are detection results from the current detector, to two-axis detected currents that are currents on two rotation axes; a two-axis current filter that reduces a noise component of the two-axis detected currents; a second coordinate converter that converts post-filtering two-axis currents to post-filtering three-phase currents on a stationary coordinate system; a first controller that generates first three-phase voltage commands based on the two-axis detected currents or the post-filtering two-axis currents; a second controller that generates second three-phase voltage commands based on the post-filtering three-phase currents; and an inverter that applies a voltage to the AC motor based on the first and second three-phase voltage commands.

FIG. 1

## Description

Technical Field

The present disclosure relates to an AC motor control device and an electric power steering device.

Background Art

Conventionally, a vector control method of performing voltage command calculation or the like on two rotation axes (for example, a d-axis and a q-axis) in AC motor current control is used. Specific examples of the vector control method are disclosed in Patent Documents 1 and 2.

In FIGS. 1 and 4 or the like of Patent Document 1, a second voltage command calculator uses detected currents (iu, iv, and iw) on a stationary coordinate system to generate a second voltage command without converting coordinates thereof.

In Patent Document 2, currents flowing in three-phase windings are detected, and the detected currents are converted to values on two rotation axes (the d-axis and the q-axis). Patent Document 2 discloses that a noise component with a resonance period included in detected values is reduced by adding newest detected values and previous detected values on the d-q axes.

Citation List

Patent Documents

Patent Document 1: Japanese Patent No. 5178768
Patent Document 2: PCT International Publication No. WO 2021/144867

Summary Of Invention

Problem to be Solved by the Invention

When an AC motor rotates at high speed, the frequency of the detected currents (iu, iv, and iw) on the stationary coordinate system also increases as disclosed in Patent Document 1. When the frequency of the detected currents on the stationary coordinate system is high and it is intended to remove a noise component included in the detected currents using a filter, a problem with a phase delay after a filtering process occurs is observed. The phase delay causes a decrease in control accuracy of the AC motor. For example, the noise component reducing method disclosed in Patent Document 2 includes processes on the d-q axes, and thus it is difficult to combine the configuration disclosed in Patent Document 2 with the configuration disclosed in Patent Document 1.

The present disclosure has been made to solve the aforementioned problem, and an object thereof is to provide an AC motor control device and an electric power steering device that suppress a decrease in control accuracy of an AC motor during high speed rotation, and reduce a noise component included in a detected current.

Means to Solve the Problem

An AC motor control device according to the present disclosure includes: a current detector that detects three-phase currents that are supplied to an AC motor; a first coordinate converter that converts pre-conversion detected currents that are detection results from the current detector, to two-axis detected currents that are currents on two rotation axes; a two-axis current filter that reduces a noise component of the two-axis detected currents; a second coordinate converter that converts post-filtering two-axis currents, which are two-axis detected currents from which the noise component is reduced by the two-axis current filter, to post-filtering three-phase currents on a stationary coordinate system; a first controller that generates first three-phase voltage commands based on the two-axis detected currents, or the post-filtering two-axis currents; a second controller that generates second three-phase voltage commands based on the post-filtering three-phase currents; and an inverter that applies a voltage to the AC motor based on the first three-phase voltage commands and the second three-phase voltage commands.

An electric power steering device according to the present disclosure includes the aforementioned AC motor control device, and the AC motor that generates an assist torque in steering of a vehicle.

Effects of the Invention

According to the present disclosure, it is possible to provide an AC motor control device and an electric power steering device that can suppress a decrease in control accuracy of an AC motor during high speed rotation, and reduce a noise component included in a detected current.

Brief Description of Drawings

[FIG. 1] A diagram illustrating a configuration of an AC motor control device according to a first embodiment.

[FIG. 2] A diagram illustrating the principle for generating a switching signal according to the first embodiment.

[FIG. 3] A diagram illustrating an example of a configuration of a two-axis current filter illustrated in FIG. 1.

[FIG. 4] A diagram illustrating an example of a configuration of a d-axis current controller illustrated in FIG. 1.

[FIG. 5] A diagram illustrating an example of a configuration of a q-axis current controller illustrated in FIG. 1.

[FIG. 6] A diagram illustrating an example of a configuration of a second controller illustrated in FIG. 1.

[FIG. 7] A diagram illustrating a first example of an operation of a selector illustrated in FIG. 1.

[FIG. 8] A diagram illustrating a second example of the operation of the selector illustrated in FIG. 1.

[FIG. 9] A diagram illustrating a third example of the operation of the selector illustrated in FIG. 1.

[FIG. 10] A diagram illustrating an example of sound-frequency characteristics of an AC Motor.

[FIG. 11] A diagram illustrating a result of verification of a magnitude of a phase delay accompanying a filtering process.

[FIG. 12] A diagram illustrating a configuration of an AC motor control device according to a second embodiment.

[FIG. 13] A diagram illustrating an example of a configuration of a second controller illustrated in FIG. 12.

[FIG. 14] A diagram illustrating a configuration of an AC motor control device according to a third embodiment.

[FIG. 15] A graph illustrating an example of a waveform of an end-to-end voltage of a shunt resistor.

[FIG. 16] A diagram illustrating a configuration of an AC motor control device according to a fourth embodiment.

[FIG. 17] A diagram illustrating an operation ON/OFF signal and a weighted average gain according to the fourth embodiment.

[FIG. 18] A diagram illustrating a configuration of an electric power steering device according to a fifth embodiment.

Description of Embodiments

First Embodiment

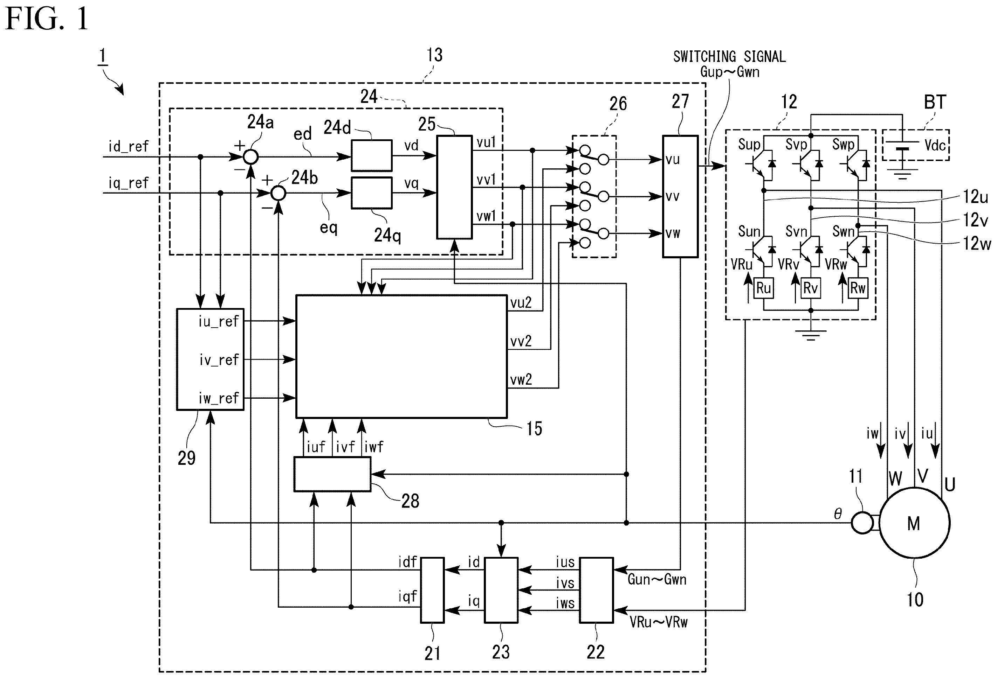

FIG. 1 is a block diagram schematically illustrating a configuration of a control device for an AC motor (hereinafter referred to as a control device 1) according to a first embodiment. As illustrated in FIG. 1, the control device 1 includes a rotor position detector 11, an inverter 12, and a control unit 13. The control device 1 controls an AC motor 10 based on current command values id_ref and iq_ref which are input from outside of the control device 1. The current command values id_ref and iq_ref are described later.
The AC motor 10 is a three-phase AC motor including three-phase windings U, V, and W. In this specification, a coordinate system corresponding to the three-phase windings U, V, and W is referred to as a "stationary coordinate system" or a "uvw coordinate system". The AC motor 10 is an AC motor that can be controlled based on two rotation axes. In this specification, "two rotation axes" means two axes that rotate in synchronization with a rotor of the AC motor 10, and are perpendicular to each other in a cross section. The "cross section" is a section which is perpendicular to a center axis of the rotor. For example, the two rotation axes may be d-q axes. A d-axis is an axis which connects the center axis of the rotor to a magnetic pole. A q-axis is an axis which is perpendicular to both the d-axis and the center axis. The two rotation axes may be $\gamma$-$\delta$ axes. A $\gamma$-axis is an axis which deviates from the d-axis in a rotation direction. A $\delta$-axis is an axis which is perpendicular to both the $\gamma$-axis and the center axis. One of the two rotation axes is referred to as a first axis, and the other is referred to as a second axis. For example, when the d-axis is defined as a first axis, the q-axis is a second axis. When the q-axis is defined as a first axis, the d-axis may be referred to as a second axis. Similarly, when the $\gamma$-axis is defined as a first axis, the $\delta$-axis is referred to as a second axis.

In the following description, it is assumed that the AC motor 10 is a permanent magnet synchronous AC motor, and the two rotation axes are d-q axes. The AC motor 10 may be, for example, a winding field synchronous AC motor, an AC induction motor, or a synchronous reluctance motor. In the following disclosure, the d-axis and the q-axis may be replaced with the $\delta$-axis and the $\gamma$-axis.

The rotor position detector 11 includes a resolver, an encoder, and a magnetoresistance (MR) sensor, and detects a rotor position $\theta$ using the resolver, the encoder, and the magnetoresistance sensor. The rotor position $\theta$ is a position in the rotation direction of the rotor of the AC motor 10. In this embodiment, the rotor position $\theta$ of the AC motor 10 is detected using the rotor position detector 11. A configuration in which the rotor position $\theta$ of the AC motor 10 is estimated without using the rotor position detector 11 can also be employed. That is, in the present disclosure, the control device 1 may not include the rotor position detector 11.

The inverter 12 is a power converter that applies a voltage to the AC motor 10. Specifically, under the control of the control unit 13, the inverter 12 converts DC electric power supplied from a DC power source BT to AC electric power, and supplies the converted AC electric power to the AC motor 10. In addition to a battery, the DC power source BT includes devices for supplying DC electric power such as a DC-DC converter, a diode rectifier, and a PWM rectifier. In this specification, an output voltage of the DC power source BT (a DC bus bar voltage) is defined as Vdc.

The inverter 12 includes upper-arm switching elements Sup, Svp, and Swp, lower-arm switching elements Sun, Svn, and Swn, and shunt resistors Ru, Rv, and Rw. The upper-arm switching elements Sup, Svp, and Swp are connected to a positive electrode of the DC power source BT. The lower-arm switching elements Sun, Svn, and Swn are connected to the upper-arm switching elements Sup, Svp, and Swp, and are connected to a negative electrode of the DC power source BT via the shunt resistors Ru, Rv, and Rw.

A U-phase serial circuit (a current supply line 12u) is formed by the upper-arm switching element Sup, the lower-arm switching element Sun, and the shunt resistor Ru. In this U-phase serial circuit, a connection point between the upper-arm switching element Sup and the lower-arm switching element Sun is connected to the winding U of the AC motor 10.

A V-phase serial circuit (a current supply line 12v) is formed by the upper-arm switching element Svp, the lower-arm switching element Svn, and the shunt resistor Rv. In this V-phase serial circuit, a connection point between the upper-arm switching element Svp and the lower-arm switching element Svn is connected to the winding V of the AC motor 10.

A W-phase serial circuit (a current supply line 12w) is formed by the upper-arm switching element Swp, the lower-arm switching element Swn, and the shunt resistor Rw. In this W-phase serial circuit, a connection point between the upper-arm switching element Swp and the lower-arm switching element Swn is connected to the winding W of the AC motor 10.

For example, semiconductor switches such as insulated gate bipolar transistors (IGBTs), bipolar transistors, and metal-oxide-semiconductor field effect transistors (MOSFETs) can be used as the upper-arm switching elements Sup, Svp, and Swp and the lower-arm switching elements Sun, Svn, and Swn.

Switching signals Gup, Gvp, and Gwp output from the control unit 13 are input to the upper-arm switching elements Sup, Svp, and Swp. Switching signals Gun, Gvn, and Gwn output from the control unit 13 are input to the lower-arm switching elements Sun, Svn, and Swn. The upper-arm switching elements Sup, Svp, and Swp and the lower-arm switching elements Sun, Svn, and Swn are switched to an ON state or an OFF state by the switching signals Gup, Gvp, and Gwp and the switching signals Gun, Gvn, and Gwn that are output from the control unit 13. In this specification and the drawings, the switching signals Gup, Gvp, Gwp, Gun, Gvn, and Gwn may be collectively referred to as "switching signals Gup to Gwn."

For example, the upper-arm switching element Sup is switched to the ON state when the switching signal Gup is an "ON command (=1)," and the upper-arm switching element Sup is switched to the OFF state when the switching signal Gup is an "OFF command (=0)." The same is true of the other switching elements (the upper-arm switching elements Svp and Swp and the lower-arm switching elements Sun, Svn, and Swn). This way, the inverter 12 generates AC electric power to be supplied to the AC motor 10 from the DC electric power supplied from the DC power source BT.

The shunt resistors Ru, Rv, and Rw are resistive elements for detecting current.

The shunt resistor Ru outputs an end-to-end voltage VRu ($=-Ru \times iu$) which is proportional to a current (an AC motor current) iu flowing in the winding U of the AC motor 10 to the control unit 13. The shunt resistor Rv outputs an end-to-end voltage VRv (=-Rv×iv) which is proportional to a current (an AC motor current) iv flowing in the winding V of the AC motor 10 to the control unit 13. The shunt resistor Rw outputs an end-to-end voltage VRw (=-Rw×iw) which is proportional to a current (an AC motor current) iw flowing in the winding W of the AC motor 10 to the control unit **13. In** this specification and the drawings, the end-to-end voltages VRu, VRv, and VRw may be collectively referred to as "end-to-end voltages VRu to VRw."

The end-to-end voltages VRu, VRv, and VRw are values which are obtained by multiplying the AC motor currents iu, iv, and iw by the resistance values of the shunt resistors Ru, Rv, and Rw, and are quantities which are proportional to the currents iu, iv, and iw. Accordingly, it is possible for the end-to-end voltages VRu, VRv, and VRw to be current detection values (detected values of the AC motor currents). The inverter 12 in the present embodiment includes current supply lines 12u, 12v, and 12w of currents supplied to the AC motor 10, and shunt resistors Ru, Rv, and Rw connected in series to the current supply lines 12u, 12v, and 12w. That is, the inverter 12 is a so-called shunt-resistor inverter.

The inverter 12 may be integrated with the AC motor 10. The inverters 12 and the AC motor 10 that are integrated are referred to as a "power pack".

The control unit 13 uses the current command values id_ref and iq_ref, the end-to-end voltages VRu, VRv, and VRw, and the rotor position θ as input values. The control unit 13 generates switching signals Gup to Gwn for driving the inverter 12 based on the input values. The control unit 13 is, for example, a PWM controller which is realized by a discrete time operator such as a microcomputer or a digital signal processor (DSP). The control unit 13 includes a two-axis current filter 21, a current detector 22, a first coordinate converter 23, a first controller 24, a selector 26, a PWM signal generator 27, a second coordinate converter 28, a third coordinate converter 29, and a second controller 15.

The current command values id_ref and iq_ref are command values (target values) of currents supplied to the AC motor 10 that are input to the control device 1 from the outside. The current command value id_ref is also referred to as a "weak-field current command value," and the current command value iq_ref is also referred to as a "torque current command value." The current command values id_ref and iq_ref may be calculated by appropriately combining maximum torque per ampere (MTPA) control, maximum torque per voltage (MTPV) control, and weak magnetic flux control which are known according to an operation range (a range of speed-torque characteristics).

The PWM signal generator 27 are described below. The PWM signal generator 27 outputs switching signals Gup to Gwn subjected to pulse width modulation (PWM) based on final voltage commands vu, vv, and vw output from the selector 26. The final voltage commands vu, vv, and vw are described later.

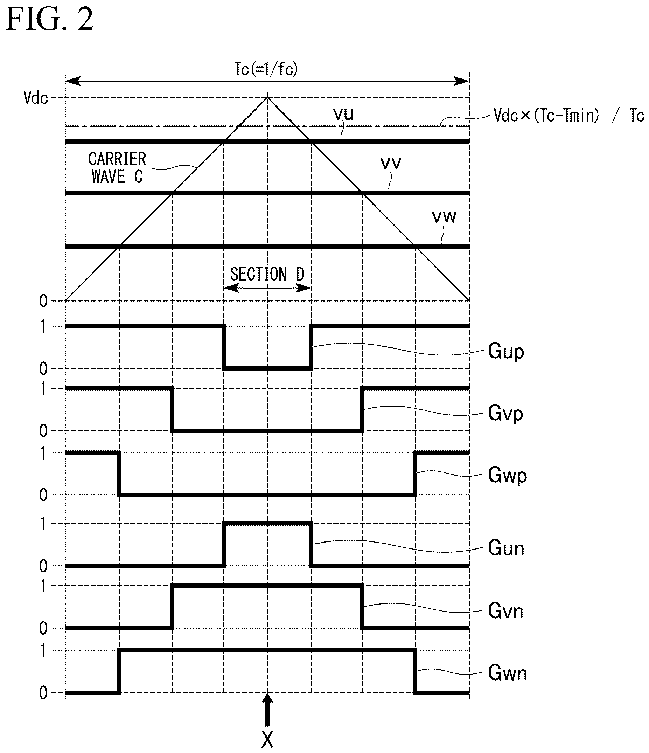

FIG. 2 is a diagram illustrating the principle in which switching signals are generated according to the first embodiment. The PWM signal generator 27 generates the switching signals Gup to Gwn by comparing a triangular carrier wave (carrier wave) C of a period Tc (a frequency fc) with the final voltage commands vu, vv, and vw. The final voltage commands vu, vv, and vw correspond to the U phase, the V phase, and the W phase.

Specifically, the PWM signal generator 27 switches the switching signal Gup to the ON state ("1") and switches the switching signal Gun to the OFF state ("0") when the final voltage command vu is greater than the triangular carrier wave C. On the other hand, the PWM signal generator 27 switches the switching signal Gup to the OFF state ("0") and switches the switching signal Gun to the ON state ("1") when the final voltage command vu is less than the triangular carrier wave C.

The PWM signal generator 27 switches the switching signal Gvp to the ON state ("1") and switches the switching signal Gvn to the OFF state ("0") when the final voltage command vv is larger than the triangular carrier wave C. On the other hand, the PWM signal generator 27 switches the switching signal Gvp to the OFF state ("0") and switches the switching signal Gvn to the ON state ("1") when the final voltage command vv is smaller than the triangular carrier wave C.

The PWM signal generator 27 switches the switching signal Gwp to the ON state ("1") and switches the switching signal Gwn to the OFF state ("0") when the final voltage command vw is greater than the triangular carrier wave C. On the other hand, the PWM signal generator 27 switches the switching signal Gwp to the OFF state ("0") and switches the switching signal Gwn to the ON state ("1") when the final voltage command vw is smaller than the triangular carrier wave C.

A short-circuit prevention time (a dead time) may be provided in the switching signals Gup to Gwn such that the upper-arm switching elements Sup, Svp, and Swp and the lower-arm switching elements Sun, Svn, and Swn of the inverter 12 are not simultaneously switched to the ON state.

The switching signals Gup to Gwn include a pattern in which all of the lower-arm switching elements Sun, Svn, and Swn are switched to the ON state during one period of an electric-angle of the AC motor 10. Specifically, a pattern in which all of the switching signals Gun, Gvn, and Gwn are switched to the ON state (1) is included as in a section D in FIG. 2.

Here, the post-PWM modulation voltage which is applied from the inverter 12 to the AC motor 10 includes a component which is a natural number multiple of the period Tc of the triangular carrier wave C, in addition to the components of the final voltage commands vu, vv, and vw. Accordingly, currents corresponding to the component which is a natural number multiple of the period Tc are supplied to the AC motor 10, and thus the AC motor 10 generates abnormal noise according to the value of the period Tc.

In order to prevent generation of such abnormal noise, for example, the period Tc of the triangular carrier wave C can be set to be equal to or less than 60 [μs] when the AC motor 10 is used as a motor for assisting with steering of an electric power steering. By setting Tc=60 [μs], the frequency fc (=1/Tc) of the abnormal noise is 16.6 kHz, which is less likely to be noise unpleasant to humans. More preferably, the period Tc of the triangular carrier wave C can be set to about 50 [μs]. By setting Tc=50 [μs], the frequency fc (=1/Tc) of the abnormal noise is about 20 kHz, which is almost inaudible to humans. The frequency band audible to humans ranges from about 20 Hz to 20 kHz. In the explanation below, it is assumed that Tc=50 [μs].

The current detector 22 illustrated in FIG. 1 is described below. The current detector 22 outputs pre-conversion detected currents ius, ivs, and iws using the end-to-end voltages VRu, VRv, and VRw of the shunt resistors Ru, Rv, and Rw, and the switching signals Gup to Gwn, which are output from the PWM signal generator 27. Specifically, the current detector 22 acquires the end-to-end voltages VRu, VRv, and VRw of the shunt resistors Ru, Rv, and Rw at a timing "X" in FIG. 2. The timing "X" is a timing at which the triangular carrier wave C has a maximum value (the DC bus bar voltage Vdc).

At the timing "X," all the switching signals Gun, Gvn, and Gwn input to the lower-arm switching elements Sun, Svn, and Swn are in the ON state ("1") as illustrated in FIG. 2. Accordingly, the current detector 22 acquires the values of the pre-conversion detected currents ius, ivs, and iws by dividing the end-to-end voltages VRu, VRv, and VRw of the shunt resistors Ru, Rv, and Rw by -Ru, -Rv, and -Rw.

The first coordinate converter 23 performs coordinate conversion based on the pre-conversion detected currents ius, ivs, and iws detected by the current detector 22 and the rotor position θ detected by the rotor position detector 11. Accordingly, the first coordinate converter 23 converts the pre-conversion detected currents ius, ivs, and iws to two-axis detected currents id and iq (dq-axis currents) which are currents on two rotation axes (the d and q axes). The first coordinate converter 23 inputs the two-axis detected currents id and iq, which are the calculation results, to the two-axis current filter 21.

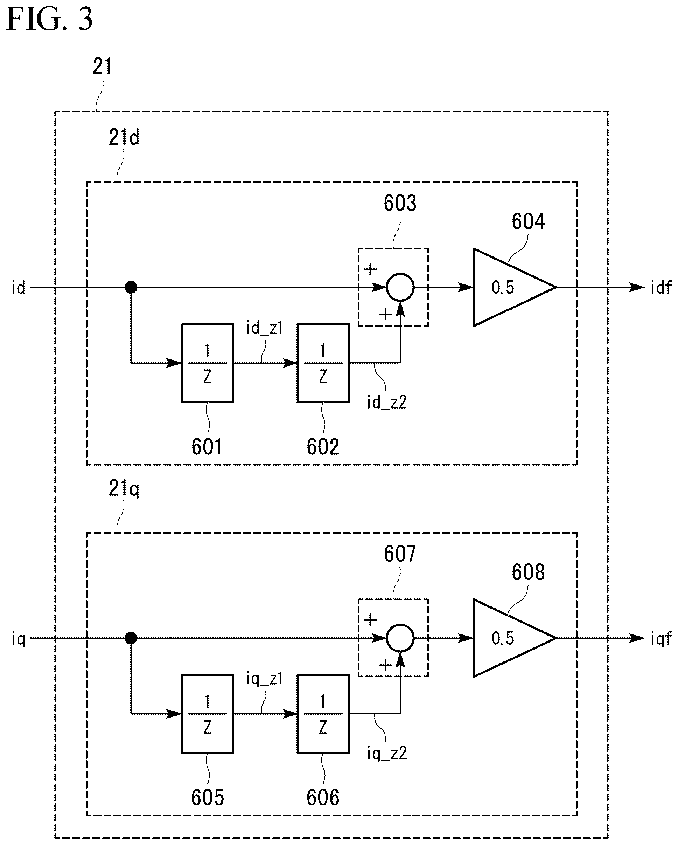

The two-axis current filter 21 outputs post-filtering two-axis currents idf and iqf which are obtained by reducing a noise component (ripples) included in the two-axis detected currents id and iq. In the following description, the process performed by the two-axis current filter 21 may be referred to as a "filtering process." The two-axis current filter 21 is described below in detail with reference to FIG. 3. As illustrated in FIG. 3, the two-axis current filter 21 includes a first filter 21d and a second filter 21q.

The first filter 21d calculates the post-filtering two-axis current idf using the detected current id. The first filter 21d includes a first delay element 601, a second delay element 602, a first adder 603, and a first multiplier 604. The first delay element 601 calculates a current id_z1 prior to the one period. The current id_z1 of one previous period is the detected current id at a point in time $1 \times Ts$ prior to the point in time at which the detected current id is detected. Here, Ts is a current detection period. The first delay element 601 outputs the current id_z1 of one previous period, to the second delay element 602.

Then, the second delay element 602 calculates a current id_z2 of two previous periods based on the current id_z1 of one previous period. The current id_z2 of two previous periods is the detected current id at a point in time that is $2 \times Ts$ prior to the point in time at which the detected current id is detected.

Then, the first adder 603 adds the current id_z2 of two previous periods to the detected current id, and outputs the resultant current to the first multiplier 604.

The first multiplier 604 calculates a post-filtering two-axis current idf by multiplying the output of the first adder 603 by 0.5. As illustrated in FIG. 1, the post-filtering two-axis current idf is output to the second coordinate converter 28 and a first difference calculator 24a.

As illustrated in FIG. 3, the second filter 21q calculates a post-filtering two-axis current iqf using the detected current iq. The second filter 21q includes a third delay element 605, a fourth delay element 606, a second adder 607, and a second multiplier 608. The third delay element 605 calculates a current iq_z1 of one previous period. The current iq_z1 of one previous period is the detected current iq at a point in time $1 \times Ts$ prior to the point in time point at which the detected current iq is detected. The third delay element 605 outputs the current iq_z1 of one previous period to the fourth delay element 606.

Then, the fourth delay element 606 calculates a current iq_z2 of two previous periods based on the current iq_z1 of one previous period. The current iq_z2 of two previous periods is the detected current iq at a point in time $2 \times Ts$ prior to the point in time at which the detected current iq is detected.

Then, the second adder 607 adds the current iq_z2 of two previous periods to the detected current iq and outputs the resultant current to the second multiplier 608.

The second multiplier 608 calculates a post-filtering two-axis current iqf by multiplying the output of the second adder 607 by 0.5. As illustrated in FIG. 1, the post-filtering two-axis current iqf is output to the second coordinate converter 28 and a second difference calculator 24b.

The principle in which a noise component is reduced by the two-axis current filter 21 is described below. In a case in which a certain signal includes a component of a period T and the signal is discretely detected, the component of the period T is cancelled to zero by adding a detected value at an arbitrary point in time to a detected value at a time period (a T/2 previous point in time) which is previous a half period to that point in time.

For example, a detected value S1 at an arbitrary point in time of a signal with a period $2\pi$ can be expressed as follows. Here, A is the amplitude of the signal, and $\alpha$ is an initial phase of the signal.

$$S1 = A \cdot \sin(\theta + \alpha)$$

A detected value S2 at a point in time which is previous a half period (a point in time prior by $\pi$) to the point in time at which the detected value S1 is detected can be expressed as follows.

$$S2 = A \cdot \sin(\theta + \alpha - \pi)$$

As can be clearly seen from the expressions, S1+S2=0 is satisfied. This is the principle in which a noise component is reduced by the two-axis current filter 21.

Here, it is assumed that a noise component with a resonance period Tr is included in the two-axis detected currents id and iq. It is conceivable that the resonance period Tr and the current detection period Ts do not form a perfect integer multiple, and it is not possible to completely remove the noise component. In this case, it is preferable that detected values at a point in time t at which the two-axis detected currents id and iq have been detected, and a point in time t' which is closest to a point in time prior by half the resonance period Tr (a point in time t-Tr/2 prior) to the point in time t be added. Accordingly, it is possible to reduce the noise component with the resonance period Tr. The "closest point in time t'" can be expressed as t'=t-Ts×n. Here, n is a natural number. That is, the point in time t' is a point in time going back by a period of time corresponding to a natural number multiple of the current detection period Ts from the point in time t and is a point in time closest to t-Tr/2.

In the present embodiment, the current detection period Ts is determined such that the resonance period Tr and the current detection period Ts satisfy a relation of Tr≥2×Ts. For example, when a mechanical resonance frequency of the AC motor 10 is about 2500 Hz, the resonance period Tr is about 400 μs. Therefore, the current detection period Ts may be set to 100 μs such that the relation of Tr≥2×Ts is satisfied.

The specific configuration of the two-axis current filter 21 is not limited to the example illustrated in FIG. 3, and other configurations capable of reducing a noise component may be employed. For example, the two-axis current filter 21 may be a low-pass filter, in which a cutoff frequency is lower than the mechanical resonance frequency of the AC motor 10. Alternatively, the two-axis current filter 21 may be a notch filter that can lower gain transmission characteristics, with respect to the mechanical resonance frequency of the AC motor 10. An infinite impulse response (IIR) filter or a finite impulse response (FIR) filter may be used as the two-axis current filter 21.

Processing in the two-axis current filter 21 immediately after the control device 1 has started is described below. In the following description, the first filter 21d is exemplified, but it is preferable that the same processing is performed on the second filter 21q. As described above, the first filter 21d calculates a post-filtering two-axis current idf based on the detected current id, which is a current detected value, and on the current id_z1 of one previous period, and the current id_z2 of two previous periods, which are past detected values. Since there is no value corresponding to id_z1 and id_z2 immediately after start, the post-filtering two-axis current idf cannot be calculated as is. Accordingly, certain values need to be set as id_z1 and id_z2, in order to perform the calculation.

Therefore, in the present embodiment, id_z1=id_z2=idf=id is set immediately after start. That is, when the control device 1 performs control, a newest "input value" (the two-axis detected current id) is set to the "past input values" (id_z1 and id_z2) and the "filter output value" (idf) of the two-axis current filter 21 immediately after the start, and then the calculation is performed. Through this processing, it is possible to avoid a torque shock of the AC motor 10 which is generated due to inappropriate values that are input as id_z1 and id_z2, so that the values before and after the filtering process become separated.

As illustrated in FIG. 1, the first controller 24 includes a first difference calculator 24a, a second difference calculator 24b, a d-axis current controller 24d, a q-axis current controller 24q, and a control coordinate converter 25. The first controller 24 calculates first three-phase voltage command values vu1, vv1, and vw1 using the aforementioned current command values id_ref and iq_ref and the post-filtering two-axis currents idf and iqf output from the two-axis current filter 21.

Details of the first controller 24 are described below.

The first difference calculator 24a calculates a d-axis current difference ed, which is a difference between the current command value id_ref and the post-filtering two-axis current idf on the d-axis. The second difference calculator 24b calculates a q-axis current difference eq, which is a difference between the current command value iq_ref and the post-filtering two-axis current iqf on the q-axis. The value of the d-axis current difference ed calculated by the first difference calculator 24a is input to the d-axis current controller 24d. The value of the q-axis current difference eq calculated by the second difference calculator 24b is input to the q-axis current controller 24q. The d-axis current controller 24d calculates a d-axis voltage command value vd using the d-axis current difference ed. The q-axis current controller 24q calculates a q-axis voltage command value vq using the q-axis current difference eq.

In this specification, a difference between a current command value and a detected current value on the first axis of two rotation axes may be referred to as a first difference. Similarly, a difference between a current command value and a detected current value on the second axis of the two rotation axes may be referred to as a second difference. For example, when the d-axis is defined as the first axis, the d-axis current difference ed is the "first difference," and the q-axis current difference eq is the "second difference." Similarly, when the q-axis is defined as the first axis, the q-axis current difference eq is the "first difference," and the d-axis current difference ed is the "second difference."

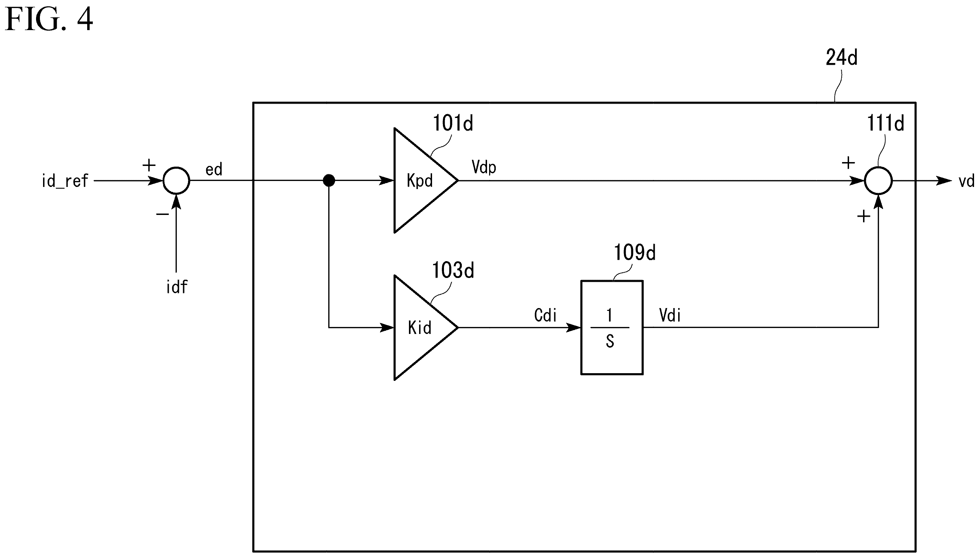

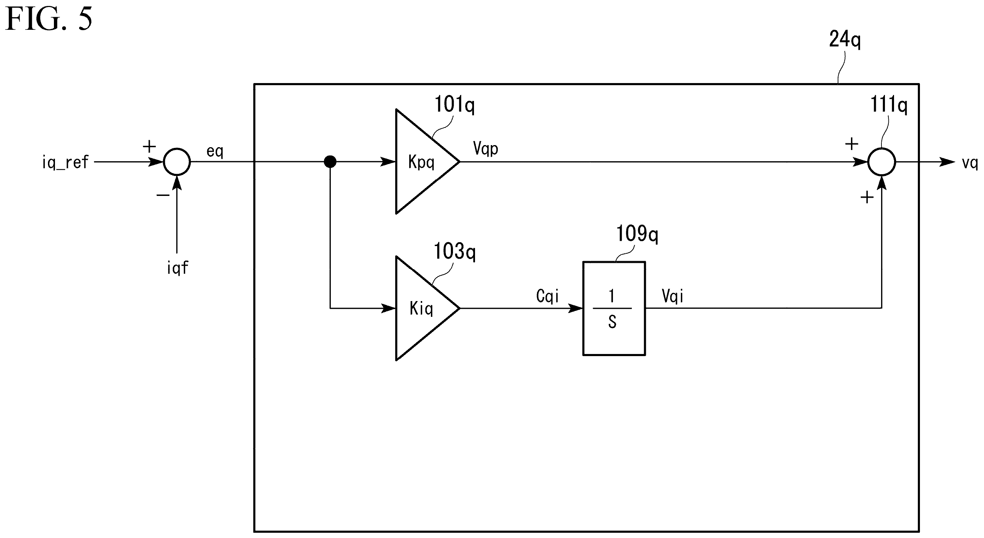

The configuration of the d-axis current controller 24d is illustrated in FIG. 4, and the configuration of the q-axis current controller 24q is illustrated in FIG. 5. As illustrated in FIG. 4, the d-axis current controller 24d includes a d-axis proportional amplifier 101d, a d-axis integral amplifier 103d, an integrator 109d, and an adder 111d.

The d-axis proportional amplifier 101d calculates a d-axis proportional output Vdp by multiplying the d-axis current difference ed by Kpd. That is, Vdp=ed×Kpd is satisfied. "Kpd" is a d-axis proportional gain which is multiplied such that an AC motor actual flowing current is a desirable response with respect to the current command value id_ref. For example, Kpd=ωcc×Ld. Here, ωcc is a response angular frequency (more specifically, a reciprocal of a time constant in a feedback control system) for performing adjustment such that the frequency response of the AC motor current with respect to the current command value is in a desirable range, and Ld is a d-axis inductance of the AC motor 10. Here, the value of Kpd is not limited to ωcc×Ld and may be appropriately adjusted by measuring responsiveness of the AC motor actual flowing current with respect to the current command value id_ref, or the like. The d-axis proportional output Vdp calculated by the d-axis proportional amplifier 101d is input to the adder 111d.

The d-axis integral amplifier 103d calculates an axis integral input Cdi (integral compensation control), by multiplying the d-axis current difference ed with Kid. That is, Cdi=ed×Kid is satisfied. "Kid" is an integral gain which is multiplied to make a steady-state value of the d-axis current difference ed zero. For example, Kid=ωcc×R. Here, R is a winding resistance value of the AC motor 10. However, the value of Kid is not limited to ωcc×R, and may be appropriately adjusted based on measurement results or the like.

The axis integral input Cdi calculated by the d-axis integral amplifier 103d is input to the integrator 109d. The integrator 109d performs an integral operation on the d-axis integral input Cdi and outputs a result thereof as a d-axis integral output Vdi to the adder 111d.

The adder 111d sums the d-axis proportional output Vdp and the d-axis integral output Vdi to calculate a d-axis voltage command value vd. The calculated voltage command value vd is input to the control coordinate converter 25 as illustrated in FIG. 1.

As illustrated in FIG. 5, the q-axis current controller 24q includes a q-axis proportional amplifier 101q, a q-axis integral amplifier 103q, an integrator 109q, and an adder 111q. The q-axis proportional amplifier 101q calculates a q-axis proportional output Vqp by multiplying the q-axis current difference eq by Kpq. That is, Vqp=eq×Kpq. "Kpq" is a q-axis proportional gain which is multiplied such that an actually flowing AC motor current is a desirable response with respect to the current command value iq_ref. For example, Kpq=ωcc×Lq. Here, ωcc is a response angular frequency (more specifically, a reciprocal of a time constant in a feedback control system) for performing adjustment such that the frequency response of the AC motor current with respect to the current command value is in a desirable range, and Lq is a q-axis inductance of the AC motor 10. Here, the value of Kpq is not limited to ωcc×Lq, and may be appropriately adjusted by measuring actual responsiveness of the actually flowing AC motor current with respect to the current command value iq_ref, or the like. The q-axis proportional output Vdq calculated by the q-axis proportional amplifier 101q is input to the adder 111q.

The q-axis integral amplifier 103q calculates an axis integral input Cqi by multiplying the q-axis current difference eq by Kiq (integral compensation control). That is, Cqi=eq×Kiq. "Kiq" is an integral gain which is multiplied to make a steady-state value of the q-axis current difference eq zero. For example, Kiq=ωcc×R. The value of Kiq is not limited to ωcc×R and may be appropriately adjusted based on measurement results or the like.

The axis integral input Cqi calculated by the q-axis integral amplifier 103q is input to the integrator 109q. The integrator 109q performs an integral operation on the q-axis integral input Cqi and outputs a result thereof as a q-axis integral output Vqi to the adder 111q.

The adder 111q sums the q-axis proportional output Vqp and the q-axis integral output Vqi to calculate a q-axis voltage command value vq. The calculated voltage command value vq is input to the control coordinate converter 25 as illustrated in FIG. 1.

As illustrated in FIG. 1, the voltage command values vd and vq on the two rotation axes (the d and q axes) and the rotor position θ are input to the control coordinate converter 25. The control coordinate converter 25 converts coordinates of the voltage command values vd and vq based on the rotor position θ and calculates first three-phase voltage commands vu1, vv1, and vw1. The first three-phase voltage commands vu1, vv1, and vw1 are input to the selector 26 and the second controller 15.

The second coordinate converter 28 converts coordinates of the post-filtering two-axis currents idf and idq output from the two-axis current filter 21 based on the rotor position θ detected by the rotor position detector 11. The second coordinate converter 28 outputs post-filtering three-phase currents iuf, ivf, and iwf acquired through this calculation to the second controller 15. That is, the post-filtering three-phase currents iuf, ivf, and iwf are results obtained by converting the post-filtering two-axis currents idf and idq which are values on the two rotation axes to values in the stationary coordinate system (the uvw coordinate system).

The third coordinate converter 29 converts coordinates of the current command values id_ref and iq_ref based on the rotor position $\theta$ detected by the rotor position detector 11 and calculates three-phase current command values iu_ref, iv_ref, and iw_ref. The third coordinate converter 29 outputs the calculation results to the second controller 15.

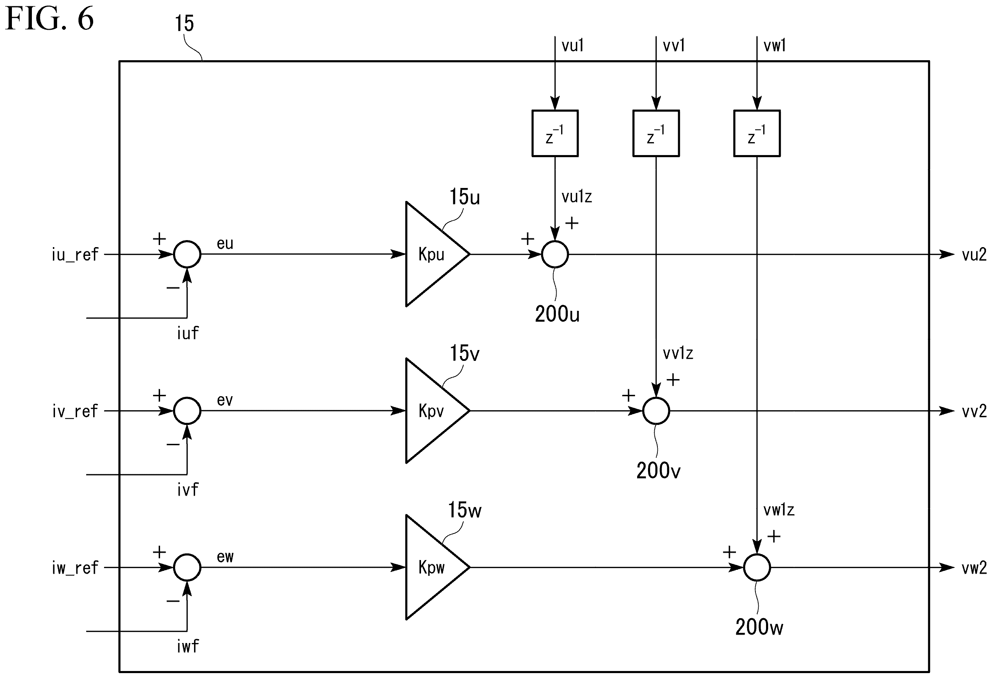

The second controller 15 calculates second three-phase voltage commands vu2, vv2, and vw2 based on the current command values id_ref and iq_ref and the post-filtering three-phase currents iuf, ivf, and iwf. As illustrated in FIG. 6, the second controller 15 includes a u-phase proportional amplifier 15u, a v-phase proportional amplifier 15v, a w-phase proportional amplifier 15w, a u-phase adder 200u, a v-phase adder 200v, and a w-phase adder 200w.

As illustrated in FIG. 6, the second controller 15 uses stored values vulz, vvlz, and vwlz as input values for calculation. The stored value vulz is a value of the first three-phase voltage command vu1 at a point in time $\Delta T$ prior to a control target point in time. The stored value vv1z is a value of the first three-phase voltage command vv1 at the point in time $\Delta T$ prior to the control target point in time. The stored value vwlz is a value of the first three-phase voltage command vw1 at the point in time $\Delta T$ prior to the control target point in time. $\Delta T$ is an execution period of control in the control unit 13. The stored values vu1z, vvlz, and vw1z may be stored, for example, in a memory area in the second controller 15.

The second controller 15 calculates a u-phase current difference eu by subtracting the post-filtering three-phase current iuf from the current command value iu_ref. The u-phase current difference eu is input to the u-phase proportional amplifier 15u. By causing the u-phase adder 200u to add the stored value vu1z to a value obtained by causing the u-phase proportional amplifier 15u to multiply the u-phase current difference eu by Kpu, the second three-phase voltage command vu2 in the u phase is calculated (proportional compensation control). Here, Kpu is a proportional gain which is multiplied to make the AC motor current iu a desired response to the current command value iu_ref. For example, the proportional gain is given as Kpu=$\omega$cc$\times$Lu. Lu is a u-phase inductance. Here, the value of Kpu is not limited to $\omega$cc$\times$Lu and may be appropriately adjusted by measuring responsiveness of the actually flowing AC motor current iu with respect to the current command value iu_ref, or the like.

The second controller 15 calculates a v-phase current difference ev by subtracting the post-filtering three-phase current ivf from the current command value iv_ref. The v-phase current difference ev is input to the v-phase proportional amplifier 15v. By causing the v-phase adder 200v to add the stored value vv1z to a value obtained by causing the v-phase proportional amplifier 15v to multiply the v-phase current difference ev by Kpv, the second three-phase voltage command vv2 in the v phase is calculated (proportional compensation control). Here, Kpv is a proportional gain which is multiplied to make the AC motor current iv a desired response to the current command value iv_ref. For example, the proportional gain is given as Kpv=$\omega$cc$\times$Lv. Lv is a v-phase inductance. Here, the value of Kpv is not limited to $\omega$cc$\times$Lv and may be appropriately adjusted by measuring actual responsiveness of the actually flowing AC motor current iv with respect to the current command value iv_ref, or the like.

The second controller 15 calculates a w-phase current difference ew by subtracting the post-filtering three-phase current iwf from the current command value iw_ref. The w-phase current difference ew is input to the w-phase proportional amplifier 15w. By causing the w-phase adder 200w to add the stored value vw1z to a value obtained by causing the w-phase proportional amplifier 15w to multiply the w-phase current difference ew by Kpw, the second three-phase voltage command vw2 in the w phase is calculated (proportional compensation control). Here, Kpw is a proportional gain which is multiplied to make the AC motor current iw a desired response to the current command value iw_ref. For example, the proportional gain is given as Kpw=$\omega$cc$\times$Lw. Lw is a w-phase inductance. Here, the value of Kpw is not limited to $\omega$cc$\times$Lw and may be appropriately adjusted by measuring actual responsiveness of the actually flowing AC motor current iw with respect to the current command value iw_ref, or the like.

As described above, the second controller 15 uses the stored values vu1z, vv1z, and vw1z and the phase current differences eu, ev, and ew to calculate the second three-phase voltage commands vu2, vv2, and vw2. Accordingly, a term of integral control included in the first three-phase voltage commands vu1, vv1, and vw1 generated by the first controller 24 can be reflected in the second three-phase voltage commands vu2, vv2, and vw2. As a result, it is possible to suppress chattering which occurs when the input to the PWM signal generator 27 switches between the first three-phase voltage commands vu1, vv1, and vw1 and the second three-phase voltage commands vu2, vv2, and vw2. In comparison with a case in which an integrator is provided in the second controller 15 to perform integral control, it is possible to decrease an amount of operation.

As illustrated in FIG. 1, the second three-phase voltage commands vu2, vv2, and vw2 calculated by the second controller 15 are output to the selector 26. The selector 26 selects one of the first three-phase voltage commands vu1, vv1, and vw1 and the second three-phase voltage commands vu2, vv2, and vw2, and outputs the selected one as final voltage commands vu, vv, and vw to the PWM signal generator 27.

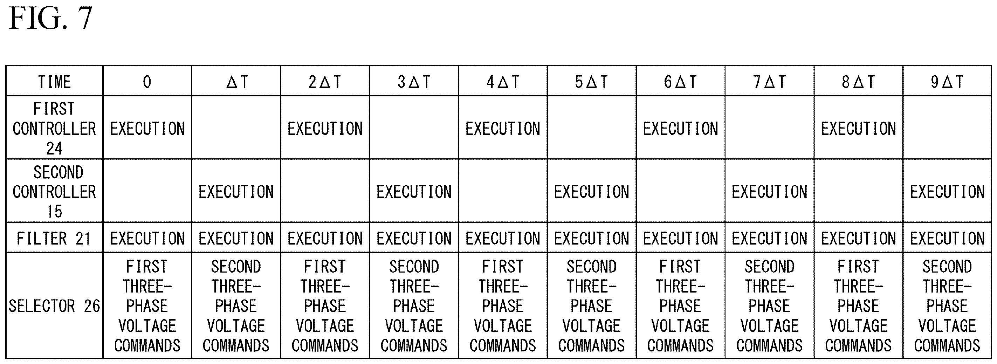

An example of the operation of the selector 26 are described below with reference to FIG. 7. "$\Delta T$" in FIG. 7 is an execution period of control in the control unit 13 as described above. The execution period $\Delta T$ is determined according to responsiveness to the current command values id_ref and iq_ref, a carrier period (frequency) of the inverter 12, and the like. In the following description, a case of $\Delta T=100\ \mu s$ are described. The elapse of time from time 0 is described in the field of "time" In FIG. 7. For example, "$\Delta T$" indicates the elapse of $1\times\Delta T$ from time 0, and "$2\Delta t$" indicates the elapse of $2\times\Delta T$ from time 0.

As illustrated in FIG. 7, the control unit 13 causes one of the first controller 24 and the second controller 15 to operate. The selector 26 selects the first three-phase voltage commands vu1, vv1, and vw1 when the control unit 13 causes the first controller 24 to operate and selects the second three-phase voltage commands vu2, vv2, and vw2 when the control unit 13 causes the second controller 15 to operate.

In the example illustrated in FIG. 7, the filter 21 performs a filtering process every $\Delta T$. Here, it is possible that the period in which the filtering process is performed is not equal to $\Delta T$. The period in which the filtering process is performed is equal to or shorter than the period in which the selector 26 switches the first three-phase voltage commands vu1, vv1, and vw1 to the second three-phase voltage commands vu2, vv2, and vw2 or the period in which the selector 26 switches the second three-phase voltage commands vu2, vv2, and vw2 to the first three-phase voltage commands vu1, vv1, and vw1. Accordingly, it is possible to suppress a decrease in performance because the output of the filter 21 becomes discrete.

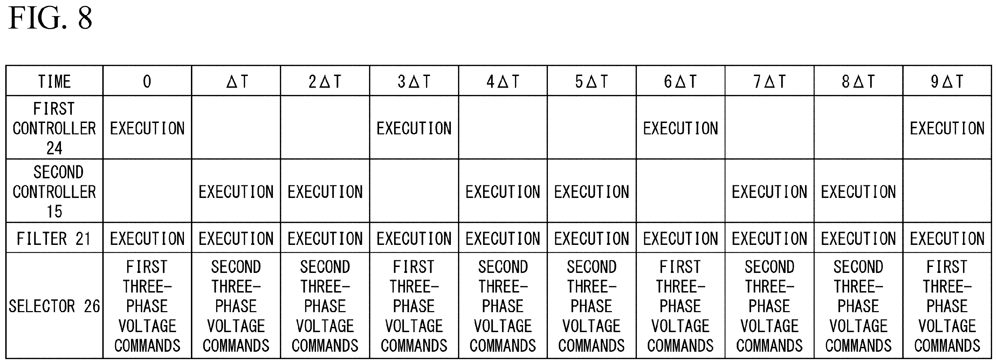

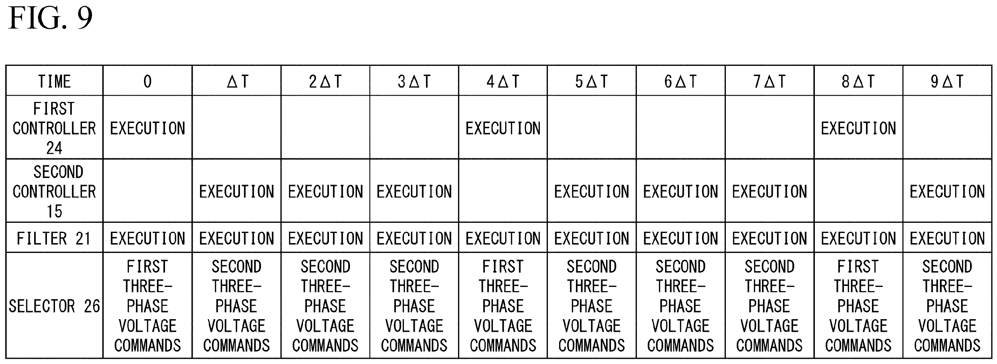

In the example illustrated in FIG. 7, the first controller 24 is selected every $2\times\Delta T$. Here, selection of the first controller 24 and the second controller 15 is not limited to the example illustrated in FIG. 7 and may be performed, for example, as illustrated in FIGS. 8 and 9. In the example illustrated in FIG. 8, the first controller 24 is selected every $3\times\Delta T$. In the example illustrated in FIG. 9, the first controller 24 is selected every $4\times\Delta T$. At what proportion the first controller 24 is selected may be determined based on the period in which integral compensation control is performed. For example, the proportion at which the first controller 24 is selected may be increased when it is more intended to improve a steady-state difference, and the proportion at which the first controller 24 is selected may be decreased otherwise.

Operations of the control device 1 according to the present embodiment are described below. With the control device 1, following operations (1) to (3) are obtained.

Operation (1)

An amount of operation is compared between the first controller 24 and the second controller 15. As illustrated in FIGS. 4 and 5, the first controller 24 performs proportional integral control in the dq coordinates which are two rotation axes. On the other hand, the second controller 15 performs proportional control in the stationary coordinate system (the uvw coordinate system). Accordingly, the amount of operation in the second controller 15 is less than that in the first controller 24. As a result, in comparison with a case in which the control device 1 performs the process using the first controller 24 every $\Delta T$, the amount of operation is less by combining the process using the second controller 15 therewith as illustrated in FIGS. 7 to 9. Accordingly, it is possible to decrease the comprehensive processing load of the CPU included in the control device 1.

Operation (2)

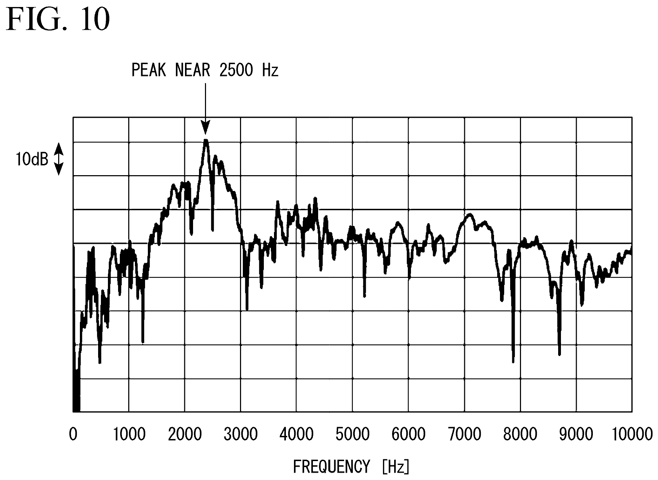

When detection noise is included in the pre-conversion detected currents ius, ivs, and iws, it is preferable to perform the processes using the first controller 24 and the second controller 15 using results in which the detection noise is removed. For example, an example of sound-frequency characteristics of the AC motor 10 is illustrated in FIG. 10. In FIG. 10, the vertical axis represents the sound, and the horizontal axis represents the frequency. In this example, the detection noise increases in the vicinity of 2500 Hz which is the mechanical resonance frequency of the AC motor 10. With the control device 1, it is possible to suppress an influence of the detection noise by using the post-filtering two-axis currents idf and idq from which a noise component is reduced by the two-axis current filter 21.

Operation (3)

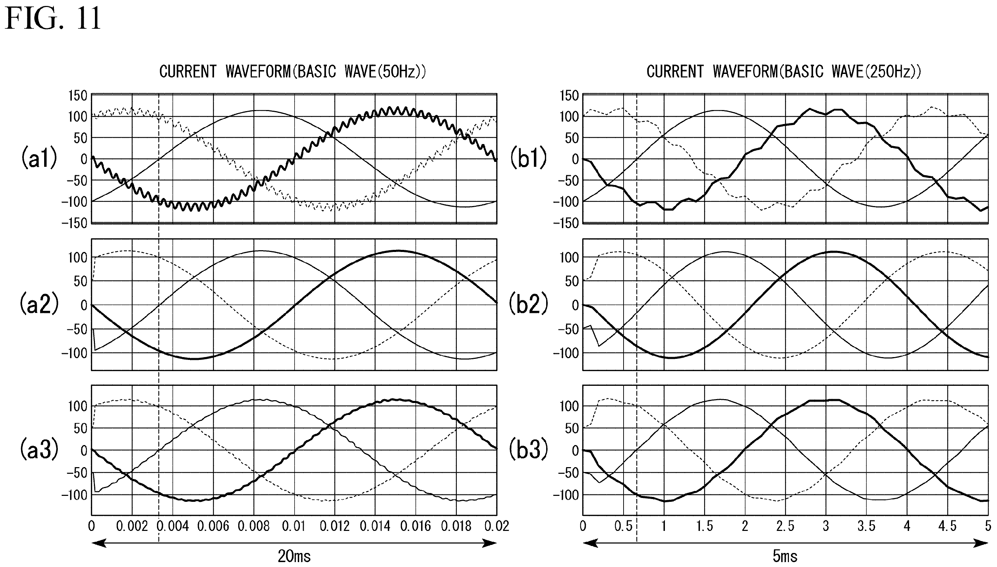

FIG. 11 illustrates a result of verification of a magnitude of a phase delay accompanying the filtering process. (a1) to (a3) in FIG. 11 represent a case in which the AC motor 10 rotates at a low speed (a basic wave of 50 Hz), and (b1) to (b3) represent a case in which the AC motor 10 rotates at a high speed (a basic wave of 250 Hz). In the graphs, the horizontal axis represents time, and the vertical axis represents current values. The current values corresponding to the U phase, the V phase, and the W phase are indicated by a thin line, a bold line, and a dotted line. (a1) and (b1) represent waveforms of the pre-conversion detected currents ius, ivs, and iws. (a2) and (b2) are graphs in a comparative example. Specifically, in the comparative example in (a2) and (b2), waveforms when a filtering process (the same process as in the two-axis current filter 21) is directly performed on the pre-conversion detected currents ius, ivs, and iws are illustrated.

Through comparison between (a1) and (a2) in FIG. 11, it can be seen that a phase delay does not occur even when the filtering process is performed on the pre-conversion detected currents ius, ivs, and iws in case of low-speed rotation. However, through comparison between (b1) and (b2) in FIG. 11, it can be seen that a phase delay occurs when the filtering process is performed on the pre-conversion detected currents ius, ivs, and iws in case of high-speed rotation. That is, when the filtering process is performed on the currents in the stationary coordinate system, a phase delay occurs particularly in case of high-speed rotation and there is a likelihood of a decrease in control accuracy of the AC motor 10.

(a3) and (b3) in FIG. 11 are graphs in an example of the present embodiment. Specifically, in the example in (a3) and (b3), the filtering process is performed on results (the two-axis detected currents id and iq) obtained by converting coordinates the pre-conversion detected currents ius, ivs, and iws using the first coordinate converter 23. Accordingly, the post-filtering two-axis currents idf and idq are obtained. Waveforms of results (the post-filtering three-phase currents iuf, ivf, and iwf) obtained by converting coordinates of the post-filtering two-axis currents idf and idq are illustrated in (a3) and (b3) in FIG. 11 by the second coordinate converter 28.

Through comparison between (a1) and (a3) in FIG. 11, it can be seen that a noise component included in the waveform of (a1) is removed without causing a phase delay in case of low-speed rotation. Through comparison between (b1) and (b3) in FIG. 11, it can be seen that a noise component included in the waveform of (b1) is removed without causing a phase delay in case of high-speed rotation. That is, with the configuration of the control device 1, it is confirmed that it is possible to improve a phase delay accompanying the filtering process particularly in case of high-speed rotation. By improving the phase delay in this way, it is possible to enhance the control accuracy of the AC motor 10.

Through the aforementioned operations (1) to (3), with the control device 1 according to the present embodiment, it is possible to decrease an operation load, to suppress a phase delay in case of high-speed rotation, and to contribute to noise reduction of the AC motor 10 due to removal of a noise component.

In the present embodiment, the post-filtering two-axis currents idf and iqf are used for calculation in the first controller 24. However, the first controller 24 may perform an operation using the two-axis detected currents id and iq instead of the post-filtering two-axis currents idf and iqf. More specifically, the first coordinate converter 23 may output the two-axis detected currents id and iq to the first difference calculator 24a and the second difference calculator 24b, and the differences ed and eq may be calculated based on the two-axis detected currents id and iq. In this case, it is possible to achieve noise reduction by adjusting the proportional gains Kpd and Kpq in proportional compensation control and the proportional gains Kid and Kiq in integral compensation control.

As described above, the control device 1 according to the present embodiment includes the current detector 22 that detects three-phase currents iu, iv, and iw supplied to the AC motor 10, the first coordinate converter 23 that converts the pre-conversion detected currents ius, ivs, and iws which are detection results from the current detector 22 to two-axis detected currents id and iq which are currents on two rotation axes, the two-axis current filter 21 that reduces a noise component of the two-axis detected currents id and iq, the second coordinate converter 28 that converts the post-filtering two-axis currents idf and idq from which the noise component is reduced by the two-axis current filter 21 to post-filtering three-phase currents iuf, ivf, and iwf in the stationary coordinate system, the first controller 24 that generates the first three-phase voltage commands vu1, vv1, and vw1 based on the two-axis detected currents id and iq or the post-filtering two-axis currents idf and idq such that the two-axis detected currents id and iq become desired values, the second controller 15 that generates the second three-phase voltage commands vu2, vv2, and vw2 based on the post-filtering three-phase currents iuf, ivf, and iwf, and the inverter 12 that applies a voltage to the AC motor 10 based on the first three-phase voltage commands vu1, vv1, and vw1 and the second three-phase voltage commands vu2, vv2, and vw2.

With the control device 1, since the noise component is reduced in the course of generating the second three-phase voltage commands vu2, vv2, and vw2, it is possible to achieve an effect of reducing vibration or noise of the AC motor 10. For example, in comparison with a case in which the filtering process is performed on the pre-conversion detected currents ius, ivs, and iws, it is possible to reduce a phase delay at the time of high-sped rotation by performing the filtering process on the two-axis detected currents id and iq.

The two-axis current filter 21 is configured to calculate the post-filtering two-axis currents idf and iqf using the previous two-axis detected currents (the current id_z1 of one previous period, and the current id_z2 of two previous periods). Then, the two-axis current filter 21 performs the calculation by substituting the newest two-axis detected currents id and iq as the previous two-axis detected currents immediately after the control device 1 of the AC motor 10 starts. Accordingly, it is possible to perform appropriate control even immediately after the control device 1 starts. For example, it is possible to reduce a torque shock due to substituting of inappropriate values as the previous two-axis detected currents immediately after the start.

In the present embodiment, the second controller 15 generates the second three-phase voltage commands vu2, vv2, and vw2 using values obtained by multiplying the proportional gains Kpu, Kpv, and Kpw by the current differences eu, ev, and ew in the stationary coordinate system (the U phase, the V phase, and the W phase). In this proportional control in the stationary coordinate system, it is possible to decrease an amount of operation in comparison with proportional integral control in the coordinate system of two rotation axes. Accordingly, it is possible to decrease an amount of operation in the whole device by partially using the operation results (the second three-phase voltage commands vu2, vv2, and vw2) from the second controller 15 as well as the first controller 24.

The two-axis current filter 21 may be a notch filter that decreases the mechanical resonance frequency of the AC motor 10 or a low-pass filter of which the cutoff frequency is equal to or less than the mechanical resonance frequency. In this case, it is possible to further contribute to noise reduction by reducing the noise component based on the mechanical resonance frequency.

Second Embodiment

A second embodiment of the present disclosure are described below, and a basic configuration thereof is the same as in the first embodiment. Accordingly, descriptions of the same parts as in the first embodiment are omitted, and only main differences therefrom are described.

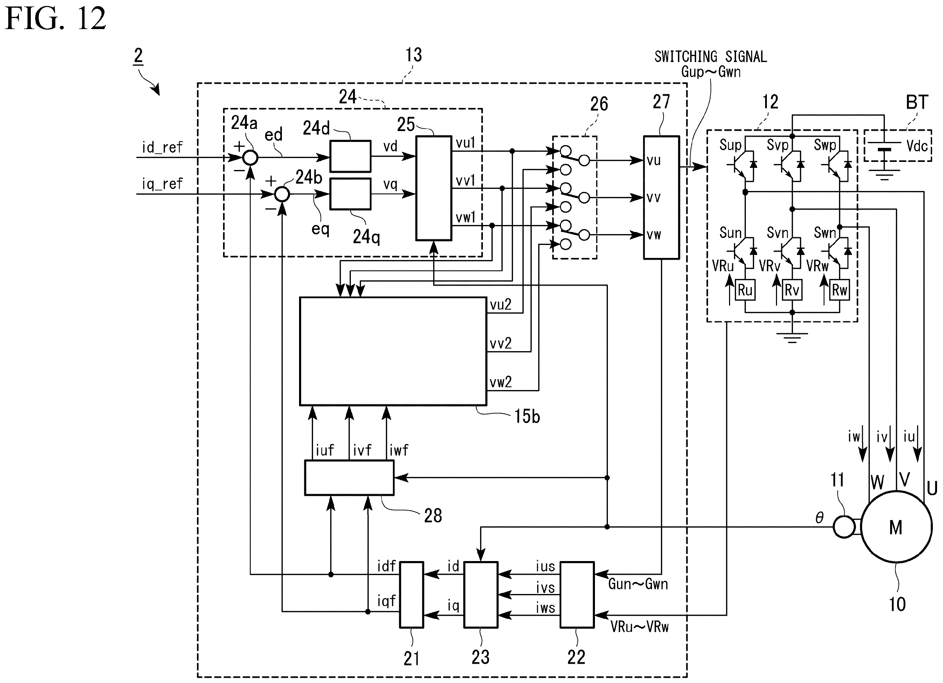

As illustrated in FIG. 12, a control device 2 according to the present embodiment does not include the third coordinate converter 29 described in the first embodiment. The control device 2 includes a second controller 15b instead of the second controller 15 in the first embodiment.

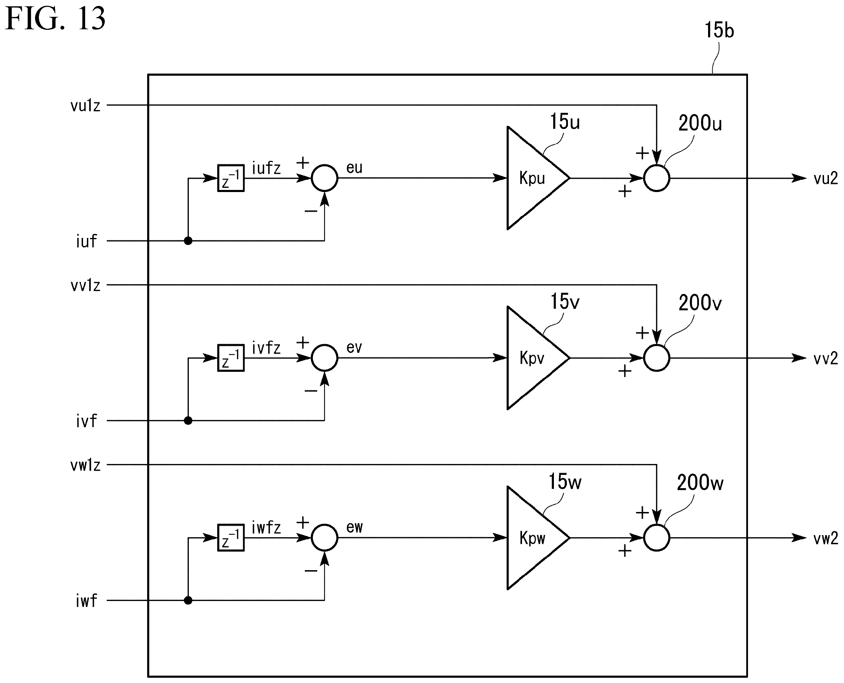

The second controller 15b are described below with reference to FIG. 13. In the second controller 15b, stored values iufz, ivfz, and iwfz are used as input values for operation. The stored values iufz, ivfz, and iwfz are values of post-filtering three-phase currents iuf, ivf, and iwf at a point in time $\Delta T$ prior to a control target point in time. The stored values iufz, ivfz, and iwfz may be stored, for example, in a memory area in the second controller 15b.

The second controller 15b calculates current differences eu, ev, and ew by subtracting the post-filtering three-phase currents iuf, ivf, and iwf from the stored values iufz, ivfz, and iwfz. The u-phase proportional amplifier 15u, the v-phase proportional amplifier 15v, and the w-phase proportional amplifier 15w multiply the current differences eu, ev, and ew by gains Kpu, Kpv, and Kpw and output the results to the u-phase adder 200u, the v-phase adder 200v, and the w-phase adder 200w. The u-phase adder 200u, the v-phase adder 200v, and the w-phase adder 200w adds the stored values vulz, vv1z, and vw1z to the outputs. As a result, the second three-phase voltage commands vu2, vv2, and vw2 are calculated.

Here, the operation function of the second controller 15b are described below with reference to an example in which the same control as illustrated in FIG. 7 is performed. In the example illustrated in FIG. 7, the control unit 13 performs a process with discrete time every natural number multiple of the execution period $\Delta T$. In the following description, the temporal order of control in the control unit 13 is generalized using a natural number K (where K=1, 2, 3, ...). For example, a (K-1)-th process means a process at a point in time that is $\Delta T$ prior to the K-th process.

First, a "difference of an actually flowing current iu in the winding U of the AC motor 10 from the current command value iu_ref" is defined as a u-phase current difference eu. With this definition, the K-th u-phase current difference eu(K) is expressed by Expression (2-1).

$$eu(K) = iu\_ref(K) - iu(K) \qquad\qquad …(2\text{-}1)$$

The (K-1)-th u-phase current difference eu(K-1) is expressed by Expression (2-2).

$$eu(K\text{-}1) = iu\_ref(K\text{-}1) - iu(K\text{-}1) \qquad\qquad …(2\text{-}2)$$

Change of the three-phase current command values iu_ref, iv_ref, and iw_ref is considered to appear later than change of the actual currents iu, iv, and iw of the AC motor 10. Therefore, iu_ref(K)=iu_ref(K-1) is satisfied in Expression (2-1). Moreover, Expression (2-3) is obtained by substituting Expression (2-2) into Expression (2-1).

$$eu(K) = eu(K\text{-}1) + (iu(K\text{-}1) - iu(K)) \qquad\qquad …(2\text{-}3)$$

Expression (2-4) is obtained by multiplying both sides of Expression (2-3) by Kpu.

$$Kpu{\cdot}eu(K) = Kpu{\cdot}eu(K\text{-}1) + Kpu{\cdot}(iu(K\text{-}1) - iu(K)) \qquad\qquad …(2\text{-}4)$$

Expression (2-5) is obtained by adding an integral term I to both sides of Expression (2-4).

$$Kpu{\cdot}eu(K) + I = \{Kpu{\cdot}eu(K\text{-}1) + I\} + Kpu{\cdot}(iu(K\text{-}1) - iu(K)) \qquad …(2\text{-}5)$$

The integral term I functions to improve a steady-state difference, and a contribution thereof to responsiveness is small. When change of the integral term I in the execution period $\Delta T$ is sufficiently small, the term surrounded by { } on the right hand side of Expression (2-5) is the same as vu1(K-1) (=vu1z). Therefore, Expression (2-5) can be expressed again by Expression (2-6).

$$Kpu \cdot eu(K)+I = vu1(K-1)+Kpu \cdot (iu(K-1)-iu(K)) \qquad \ldots(2\text{-}6)$$

The left hand side of Expression (2-6) is the same as the second three-phase voltage command vu2(K) in the U phase, which is to be acquired at the K-th. Accordingly, Expression (2-7) is obtained.

$$vu2(K) = vu1(K-1)+Kpu \cdot (iu(K-1)-iu(K)) \qquad \ldots(2\text{-}7)$$

Expression (2-7) may be expressed by Expression (2-8).

$$vu2 = vu1z+Kpu \cdot (iufz-iuf) \qquad \ldots(2\text{-}8)$$

Expression (2-8) is the same as a calculation process of acquiring the second three-phase voltage command vu2 in FIG. 13. The same is true of the V phase and the W phase.

As described above, in the present embodiment, the second controller 15 generates the second three-phase voltage commands vu2, vv2, and vw2 using values obtained by multiplying the current differences eu, ev, and ew in the stationary coordinate system (the U phase, the V phase, and the W phase) by the proportional gains Kpu, Kpv, and Kpw. In this proportional control in the stationary coordinate system, it is possible to decrease an amount of operation in comparison with proportional integral control in the coordinate system of two rotation axes. Accordingly, it is possible to decrease an amount of operation in the whole device by partially using the operation results (the second three-phase voltage commands vu2, vv2, and vw2) from the second controller 15 as well as the first controller 24. In the present embodiment, it is possible to achieve the same effects as in the first embodiment while omitting the third coordinate converter 29 associated with generation of the current command values iu_ref, iv_ref, and iw_ref. Accordingly, it is possible to more effectively decrease the processing load of the CPU.

Third Embodiment

A third embodiment of the present disclosure are described below, and a basic configuration thereof is the same as in the first embodiment. Accordingly, descriptions of the same parts as in the first embodiment are omitted, and only main differences therefrom are described.

In the present embodiment, an application example of the processing immediately after the control device 1 has started, which is described above in the first embodiment, are described.

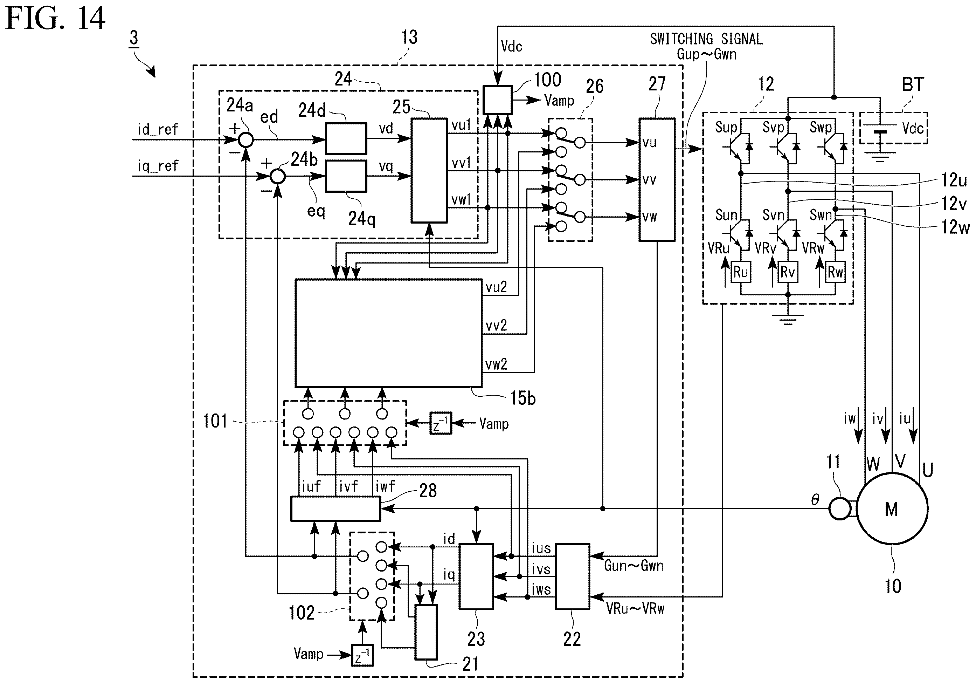

FIG. 14 is a diagram illustrating a configuration of a control device 3 according to the present embodiment. Description of the same parts as in the first and second embodiments are omitted. The control device 3 includes an amplitude calculator 100, a first auxiliary selector 102, and a second auxiliary selector 101. The first auxiliary selector 102 switches currents to be input to the first controller 24 between the two-axis detected currents id and iq and post-filtering two-axis currents idf and iqf based on a previous value Vamp_z of a voltage amplitude Vamp which is an output of the amplitude calculator 100. The second auxiliary selector 101 switches currents to be input to the second controller 15b between the pre-conversion detected currents ius, ivs, and iws and the post-filtering three-phase currents iuf, ivf, and iwf based on Vamp_z. Details are described below.

The amplitude calculator 100 calculates the voltage amplitude Vamp of the first three-phase voltage commands vu1, vv1, and vw1 based on Expression (3-1).

$$Vamp = \{(Vu1^2+Vv1^2+Vw1^2)/(Vdc^2/2)\}^{0.5} \qquad \ldots(3\text{-}1)$$

In Expression (3-1), the value of the output voltage Vdc of the DC power source BT may be a value detected by a voltage sensor (not illustrated). Alternatively, the output voltage Vdc may be set to a fixed value (for example, Vdc=12 [V]) for the purpose of a decrease in cost through a decrease in the number of sensors.

The second auxiliary selector 101 compares the previous value Vamp_z of the voltage amplitude Vamp with an amplitude threshold value Vth and selects currents to be input to the second controller 15b as follows.

$$\text{Case of Vamp\_z>Vth: iuf, ivf, and iwf are input to the second controller 15b}$$
$$\ldots(3\text{-}2)$$

$$\text{Case of Vamp\_z} \leq \text{Vth: ius, ivs, and iws are input to the second controller 15b}$$

$$\dots(3\text{-}3)$$

That is, when the previous value Vamp_z is greater than the amplitude threshold value Vth, the post-filtering three-phase currents iuf, ivf, and iwf are input to the second controller 15b. When the previous value Vamp_z is less than the amplitude threshold value Vth, the pre-conversion detected currents ius, ivs, and iws not subjected to the filtering process are input to the second controller 15b. On the other hand, when the previous value Vamp_z is equal to the amplitude threshold value Vth, the post-filtering three-phase currents iuf, ivf, and iwf may be input to the second controller 15b. Setting of the amplitude threshold value Vth are described later.

The first auxiliary selector 102 compares the previous value Vamp_z of the voltage amplitude Vamp with the amplitude threshold value Vth and selects currents to be input to the first controller 24 as follows.

$$\text{Case of Vamp\_z} > \text{Vth: idf and iqf are input to the first controller 24} \dots(3\text{-}4)$$

$$\text{Case of Vamp\_z} \leq \text{Vth: id and iq are input to the first controller 24} \dots(3\text{-}5)$$

That is, when the previous value Vamp_z is greater than the amplitude threshold value Vth, the post-filtering two-axis currents idf and iqf are input to the first controller 24. When the previous value Vamp_z is less than the amplitude threshold value Vth, the two-axis detected currents id and iq not subjected to the filtering process are input to the first controller 24. On the other hand, when the previous value Vamp_z is equal to the amplitude threshold value Vth, the post-filtering two-axis currents idf and iqf may be input to the first controller 24.

The amplitude threshold value Vth are described below. The inverter 12 illustrated in FIG. 14 is a so-called shunt-resistor inverter. The following description can be similarly applied to another type inverter. As long as resistors are inserted into the current supply lines 12u, 12v, and 12w of the main circuit and three-phase currents iu, iv, and iw are detected based on the end-to-end voltages of the corresponding resistors, the configuration of the inverter 12 can be modified.

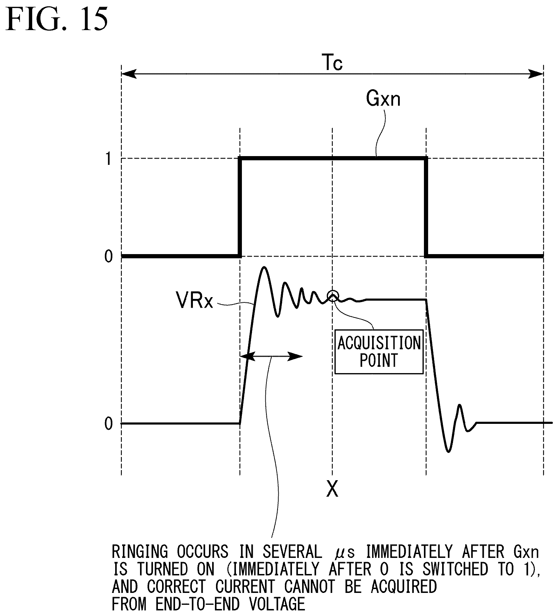

Gxn illustrated in FIG. 15 represents an example of a waveform of one of the switching signals Gun, Gvn, and Gwn of the lower-arm switching elements Sun, Svn, and Swn. VRx represents an example of a waveform of one of the end-to-end voltages VRu, VRv, and VRw of the shunt resistors Ru, Rv, and Rw. In the example illustrated in FIG. 15, ringing occurs in the end-to-end voltage VRx of the shunt resistor within several µs after the signal Gxn has changed from 0 to 1. Ringing is a phenomenon in which the end-to-end voltage of the shunt resistor fluctuates within a predetermined time when switching has occurred in the inverter 12. When the current detector 22 acquires the pre-conversion detected currents ius, ivs, and iws based on the end-to-end voltages VRu, VRv, and VRw of the shunt resistors including this ringing, the detection result includes an error. When an error is included in the pre-conversion detected currents ius, ivs, and iws, an error is also included in the converted two-axis detected currents id and iq.

In order to accurately acquire the pre-conversion detected currents ius, ivs, and iws, it is preferable that the ON time of the corresponding lower-arm switching elements Sun, Svn, and Swn be longer than a time threshold value Tmin which is set according to a convergence time of ringing. In order to set the ON time of the lower-arm switching elements Sun, Svn, and Swn to be longer than the time threshold value Tmin, it is preferable that the voltage input to the PWM signal generator 27 be equal to or less than Vdc×(Tc-Tmin)/Tc indicated by an alternated long and short dash line in FIG. 2.

In FIG. 2, all the final voltage commands vu, vv, and vw (that is, the voltages input to the PWM signal generator 27) are equal to or less than Vdc×(Tc-Tmin)/Tc. Accordingly, it is possible to exclude an error based on ringing and to accurately acquire the pre-conversion detected currents ius, ivs, and iws based on the end-to-end voltages VRu, VRv, and VRw in the shunt resistors. In this way, a detection method of detecting the pre-conversion detected currents ius, ivs, and iws based on the end-to-end voltages VRu, VRv, and VRw of the shunt resistors corresponding to three phases is referred to as "three-phase detection."

When the voltage amplitude Vamp increases with an increase in the rotational frequency of the AC motor 10, some of the final voltage commands vu, vv, and vw may have a large value close to the maximum value Vdc of the triangular carrier wave C. When the value of the final voltage command vu is greater than the value of Vdc×(Tc-Tmin)/Tc (hereinafter also referred to as an "upper limit"), a difference between a point in time at which Gun switches from 0 to 1 and a point in time at the timing X decreases. Accordingly, an influence of ringing is included in the end-to-end voltage VRu of the u-phase shunt resistor acquired at the timing X.

Therefore, the pre-conversion detected current of a phase in which the ON time of the switching signals Gun, Gvn, and Gwn of the lower-arm switching elements is shorter than the time threshold value Tmin may be generated from the remaining two phases. In this way, a detection method of detecting the pre-conversion detected current of one of three phases based on the pre-conversion detected currents of the remaining two phases is referred to as "two-phase detection." For example, when the ON time of the switching signal Gun is shorter than the time threshold value Tmin, the pre-conversion detected current ius of the U phase may be calculated by ius=-ivs-iws. Similarly, when the ON time of the switching signal Gvn is shorter than the time threshold value Tmin, ivs=-ius-iws may be calculated. When the ON time of the switching signal Gwn is shorter than the time threshold value Tmin, iws=-ius-ivs may be calculated.

A relationship between the number of phases used for current detection and the voltage amplitude Vamp is as follows. That is, when the voltage amplitude Vamp is low and instantaneous values of the final voltage commands vu, vv, and vw of three phases are all equal to or less than the upper limit (Vdc×(Tc-Tmin)/Tc), "three-phase detection" is used. Alternatively, when an instantaneous value of the one of the final voltage commands vu, vv, and vw of three phases is equal to or greater than the upper limit (Vdc×(Tc-Tmin)/Tc), "two-phase detection" is used. Here, "three-phase detection" of "three-phase detection" and "two-phase detection" has higher accuracy. Accordingly, in order to enhance the control accuracy of the AC motor 10, it is preferable to use "three-phase detection" as much as possible. However, in view of an increase in output of the AC motor 10, it may be preferable that the voltage amplitude Vamp increase and "two-phase detection" be used.

Therefore, in the present embodiment, the amplitude threshold value Vth is set to "(Tc-Tmin)/Tc." "(Tc-Tmin)/Tc" can be said to be a numerical value obtained by dividing the upper limit "Vdc×(Tc-Tmin)/Tc" by Vdc and standardizing the resultant value. By setting the amplitude threshold value Vth in this way, the current value passing through the filter 21 is selected by the auxiliary selectors 101 and 102 when "two-phase detection" is performed. Accordingly, it is possible to decrease an influence of a decrease in current detection accuracy and to suppress an increase in vibration and noise generated from the AC motor 10. When "three-phase detection is performed, the current detection accuracy is high. It is possible to improve responsiveness of the AC motor 10 by selecting a current value not passing through the filter 21 in the three-phase detection.

Calculation using the voltage amplitude Vamp of the first three-phase voltage commands vu1, vv1, and vw1 is described above. Here, control may be performed based on a result of comparison of the voltage amplitude of the second three-phase voltage commands vu2, vv2, and vw2 with the amplitude threshold value Vth. Alternatively, the voltage amplitudes of both the first three-phase voltage commands vu1, vv1, and vw1 and the second three-phase voltage commands vu2, vv2, and vw2 may be compared with the amplitude threshold value Vth, and control may be performed in combination of the results of comparison.

A voltage applied to a general AC motor including the AC motor 10 according to the present embodiment and the rotational frequency of the AC motor are considered to have a proportional relation. Therefore, a value associated with the rotational frequency instead of the voltage amplitude Vamp may be used as a physical quantity which is input to the auxiliary selectors 101 and 102. For example, the rotational frequency when the voltage amplitude Vamp of the AC motor 10 is equal to the amplitude threshold value Vth is used as a rotational frequency threshold value Nth. Switching based on the amplitude threshold value Vth according to the present embodiment may be replaced with switching based on the rotational frequency threshold value Nth. Switching may be performed using both the amplitude threshold value Vth and the rotational frequency threshold value Nth.

In this specification, a concept of including the voltage amplitude Vamp and a physical quantity (such as a rotational frequency) proportional thereto is defined as an amplitude-correlated physical quantity. A physical threshold value (the amplitude threshold value Vth) is used to determine whether control is to be performed based on the output of the two-axis current filter 21. A concept of the voltage amplitude Vamp corresponding to the "amplitude threshold value Vth" is defined as a physical threshold value" in the amplitude-correlated physical quantity. That is, a current value passing through the filter 21 may be selected when the amplitude-correlated physical quantity is equal to or greater than the physical threshold value, and a current value not passing through the filter 21 may be selected otherwise.

In FIG. 14, a configuration in which the second auxiliary selector 101 is used and the first auxiliary selector 102 is omitted may be employed. That is, in calculation in the first controller 24, the two-axis detected currents id and iq or the post-filtering two-axis currents idf and idq may be normally used. Alternatively, a configuration in which the first auxiliary selector 102 is used and the second auxiliary selector 101 is omitted may be employed. That is, in calculation in the second controller 15b, any of the pre-conversion detected currents ius, ivs, and iws and the converted three-phase currents iuf, ivf, and iwf may be normally used.

Processing for the two-axis current filter 21 are described below. In the following description, a state in which the voltage amplitude Vamp is less than the amplitude threshold value Vth is referred to as a "first state," and a state in which the voltage amplitude Vamp is equal to or greater than the amplitude threshold value Vth is referred to as a "second state." In the present embodiment, immediately after the first state is switched to the second state, the same problem as in the two-axis current filter 21 immediately after the control device starts occurs as described above in the first embodiment. That is, calculation in the two-axis current filter 21 is not performed in the first state. When this state is switched to the second state and calculation in the two-axis current filter 21 is performed, values corresponding to the current id_z1 of one previous period, and the current id_z2 of two previous periods are not present. Accordingly, the post-filtering two-axis current idf cannot be calculated. Alternatively, even when it is possible to calculate, the value when the second state is previously switched to the first state is maintained, there is a likelihood that the calculation is performed as is. Accordingly, when it is intended to appropriately perform the calculation, appropriate values need to be set as id_z1 and id_z2.

Therefore, in the present embodiment, id_z1=id_z2=idf=id is set immediately after the first state (Vamp<Vth) is switched to the second state (Vamp≥Vth). That is, newest input values are set as the "previous input values" (id_z1 and id_z2) of the two-axis current filter 21 and the "filter output value" (idf), and the calculation is performed. Through this processing, it is possible to avoid a torque shock of the AC motor 10 which is generated because inappropriate values are input as id_z1 and id_z2 and the values before and after the filtering process are separated.

In the control device 3 according to the present embodiment, as described above, when the amplitude-correlated physical quantity, which is correlated with the voltage amplitude of the first three-phase voltage commands vu1, vv1, and vw1 or the voltage amplitude of the second three-phase voltage commands vu2, vv2, and vw2, is equal to or greater than the physical threshold value, the first three-phase voltage commands vu1, vv1, and vw1 are generated based on the post-filtering two-axis currents idf and iqf, and the second three-phase voltage commands vu2, vv2, and vw2 are generated based on the post-filtering three-phase currents iuf, ivf, and iwf. When the amplitude-correlated physical quantity is less than the physical threshold value, the first three-phase voltage commands vu1, vv1, and vw1 are generated based on the two-axis detected currents id and iq, and the second three-phase voltage commands vu2, vv2, and vw2 are generated based on the pre-conversion detected currents ius, ivs, and iws.

With this control device 3, the post-filtering current value passing through the two-axis current filter 21 is used when the amplitude-correlated physical quantity is greater than the physical threshold value. When the amplitude-correlated physical quantity is greater than the physical threshold value, it is possible to decrease an influence of a noise component by performing the filtering process. When the amplitude-correlated physical quantity is less than the physical threshold value, it is possible to decrease a processing load of calculation by not performing the filtering process.

In the control device 3, the two-axis current filter 21 is configured to calculate the post-filtering two-axis currents idf and iqf using the previous two-axis detected currents (the current id_z1 of one previous period, and the current id_z2 of two previous periods). When the first state in which the amplitude-correlated physical quantity is less than the physical threshold value is switched to the second state in which the amplitude-correlated physical quantity is equal to or greater than the physical threshold value, the two-axis current filter 21 performs calculation using newest two-axis detected currents id and iq as the previous two-axis detected currents. Accordingly, it is possible to perform appropriate control even when the first state is switched to the second state. For example, when the first state is switched to the second state, it is possible to avoid a torque shock of the AC motor 10 which is generated because inappropriate values are input as the previous two-axis detected currents.

The inverter 12 includes the current supply lines 12u, 12v, and 12w of currents supplied to the AC motor 10 and the shunt resistors Ru, Rv, and Rw connected in series to the current supply lines 12u, 12v, and 12w, and the current detector 22 detects the pre-conversion detected currents ius, ivs, and iws based on the end-to-end voltages VRu, VRv, and VRw of the shunt resistors Ru, Rv, and Rw. The physical threshold value (for example, the amplitude threshold value Vth) is determined based on the period Tc of the triangular carrier wave C and the time threshold value Tmin. More specifically, for example, when the physical threshold value is the amplitude threshold value Vth, Vth=(Tc-Tmin)/Tc is satisfied. Accordingly, even with the control device using the shunt-resistor inverter 12, it is possible to decrease an influence of ringing on the current detection accuracy.

Fourth Embodiment

A fourth embodiment of the present disclosure is described below, and a basic configuration thereof is the same as in the third embodiment. Accordingly, descriptions of the same parts as in the third embodiment are omitted, and only main differences therefrom are described.

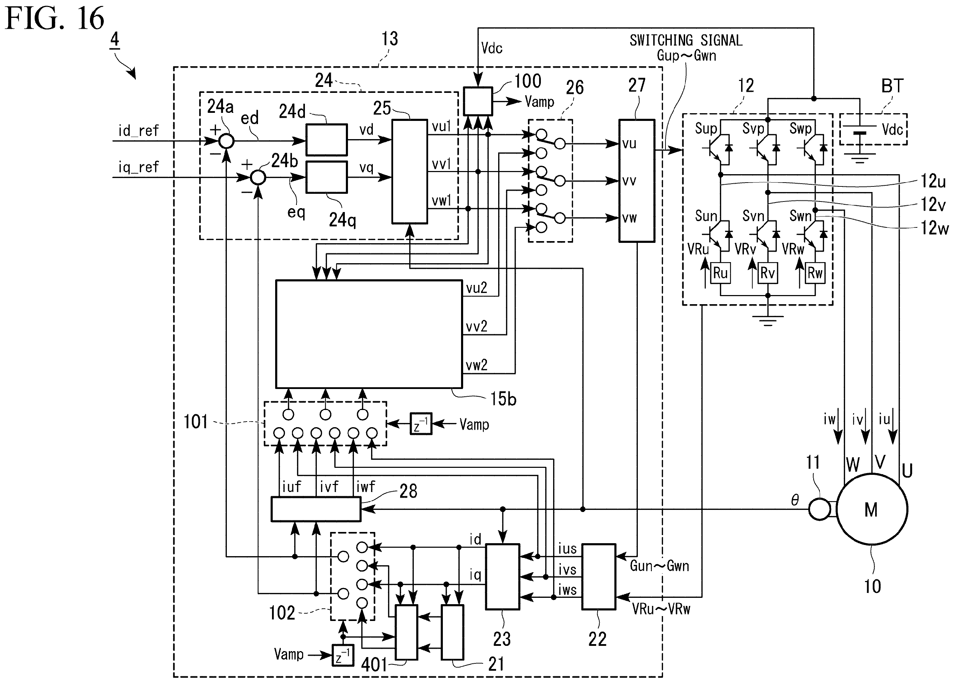

FIG. 16 illustrates a configuration of a control device 4 according to the present embodiment. The control device 4 includes a weighted average processing unit 401 in addition to the control device 3 according to the third embodiment.

As illustrated in FIG. 16, the two-axis detected currents id and iq are input to the weighted average processing unit 401 from the first coordinate converter 23. The post-filtering two-axis currents idf and iqf are input to the weighted average processing unit 401 from the two-axis current filter 21. The previous value Vamp_z of the voltage amplitude Vamp which is the output of the amplitude calculator 100 is input to the weighted average processing unit 401. The weighted average processing unit 401 calculates weighted average outputs idf' and iqf' based on Expressions (4-1) and (4-2)

$$\text{idf'} = (1-Kf) \times id + Kf \times idf \qquad \qquad \ldots(4\text{-}1)$$

$$\text{iqf'} = (1-Kf) \times id + Kf \times idf \qquad \qquad \ldots(4\text{-}2)$$

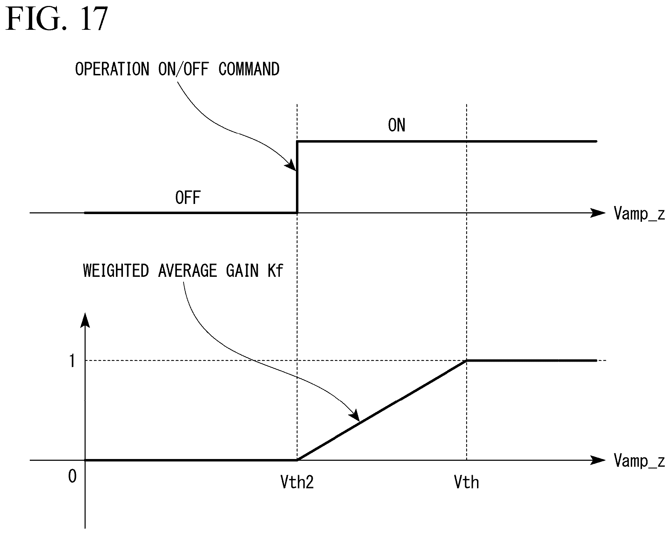

In Expressions (4-1) and (4-2), Kf is a weighted average gain. The weighted average gain Kf is determined based on the previous value Vamp_z of the voltage amplitude Vamp as illustrated in FIG. 17. A specific numerical value of the weighted average gain Kf varies in a range of 0 to 1 based on the previous value Vamp_z.

In the upper part of FIG. 17, a relationship between an operation ON/OFF command of the two-axis current filter 21 and the previous value Vamp_z of the voltage amplitude Vamp is illustrated. In the lower part of FIG. 17, a relationship between the weighted average gain Kf of the two-axis current filter 21 and the previous value Vamp_z is illustrated. The operation ON/OFF command is a command for switching whether to perform the filtering process in the two-axis current filter 21 or not. The filtering process is performed when the operation ON/OFF command is in an ON state, and the filtering process is not performed when the operation ON/OFF command is in an OFF state. The operation ON/OFF command may be generated, for example, by the amplitude calculator 100 or may be generated by another part which can perform calculation.

As illustrated in the upper part of FIG. 17, the operation ON/OFF command is set to the ON state when the previous value Vamp_z is greater than a second amplitude threshold value Vth2 and set to the OFF state otherwise. The second amplitude threshold value Vth2 is a physical quantity having the same dimensions as the amplitude threshold value Vth. The second amplitude threshold value Vth2 is set to a value less than the amplitude threshold value Vth.

As illustrated in the lower part of FIG. 17, the weighted average gain Kf is set to 0 when the previous value Vamp_z is less than the second amplitude threshold value Vth2. When the previous value Vamp_z is greater than the amplitude threshold value Vth, the weighted average gain Kf is set to 1. When the previous value Vamp_z is between the second amplitude threshold value Vth2 and the amplitude threshold value Vth, the weighted average gain Kf varies linearly between 0 and 1 along with the value of the previous value Vamp_z.

With the operation of the weighted average processing unit 401, when the previous value Vamp_z of the voltage amplitude Vamp is equal to or less than the second amplitude threshold value Vth2, the weighted average outputs idf' and iqf' match the inputs (the two-axis detected currents id and iq) of the two-axis current filter 21. When the previous value Vamp_z is equal to or greater than the amplitude threshold value Vth, the weighted average outputs idf' and iqf' match the outputs (the post-filtering two-axis currents idf and iqf) of the two-axis current filter 21. When the previous value Vamp_z is between the second amplitude threshold value Vth2 and the amplitude threshold value Vth, the weighted average outputs idf' and iqf' are values obtained by weighted-averaging the inputs (the two-axis detected currents id and iq) and the outputs (the post-filtering two-axis currents idf and iqf) of the two-axis current filter 21 based on the previous value Vamp_z.

The weighted average processing unit 401 inputs the weighted average outputs idf' and iqf' to the first auxiliary selector 102. The first auxiliary selector 102 according to the present embodiment performs a process in which switching between the two-axis detected currents id and iq and the post-filtering two-axis currents idf and iqf described in the third embodiment is replaced with switching between the two-axis detected currents id and iq and the weighted average outputs idf' and iqf'. That is, the first auxiliary selector 102 according to the present embodiment switches currents to be input to the first controller 24 between the two-axis detected currents id and iq and the weighted average outputs idf' and iqf' based on the previous value Vamp_z of the voltage amplitude Vamp.

In this specification, the concept of the voltage amplitude Vamp corresponding to the "second amplitude threshold value Vth2" is defined as a "second physical threshold value" in the amplitude-correlated physical quantity. That is, in the control device 4 according to the present embodiment, the two-axis current filter 21 performs its operation (the filtering process) when the previous value of the amplitude-correlated physical quantity is greater than the second physical threshold value less than the physical threshold value. The weighted average processing unit 401 performs a weighted average process on the two-axis detected currents id and iq and the post-filtering two-axis currents idf and iqf when the previous value of the amplitude-correlated physical quantity is between the second physical threshold value and the physical threshold value. The weighted average processing unit 401 increases the proportion of the post-filtering two-axis currents idf and iqf as the amplitude-correlated physical quantity increases when the weighted average process is performed.

With the control device 4 according to the present embodiment, since the weighted average processing unit 401 is provided, it is possible to decrease chattering of the input from the first auxiliary selector 102 to the first controller 24. That is, a change in numerical value is smaller when the input to the first controller 24 switches between the two-axis detected currents id and iq and the weighted average outputs idf' and iqf' than when the input switches between the two-axis detected currents id and iq and the post-filtering two-axis currents idf and iqf. Accordingly, it is possible to suppress occurrence of noise, vibration, or the like in the AC motor 10 accompanying the switching in the first auxiliary selector 102.

Fifth Embodiment

A fourth embodiment of the present disclosure are described below, and a basic configuration thereof is the same as in the first embodiment. Accordingly, descriptions of the same parts as in the first embodiment are omitted, and only main differences therefrom are described. In the present embodiment, the techniques described above in the first to fourth embodiments are applied to control of an AC motor included in an electric power steering device.

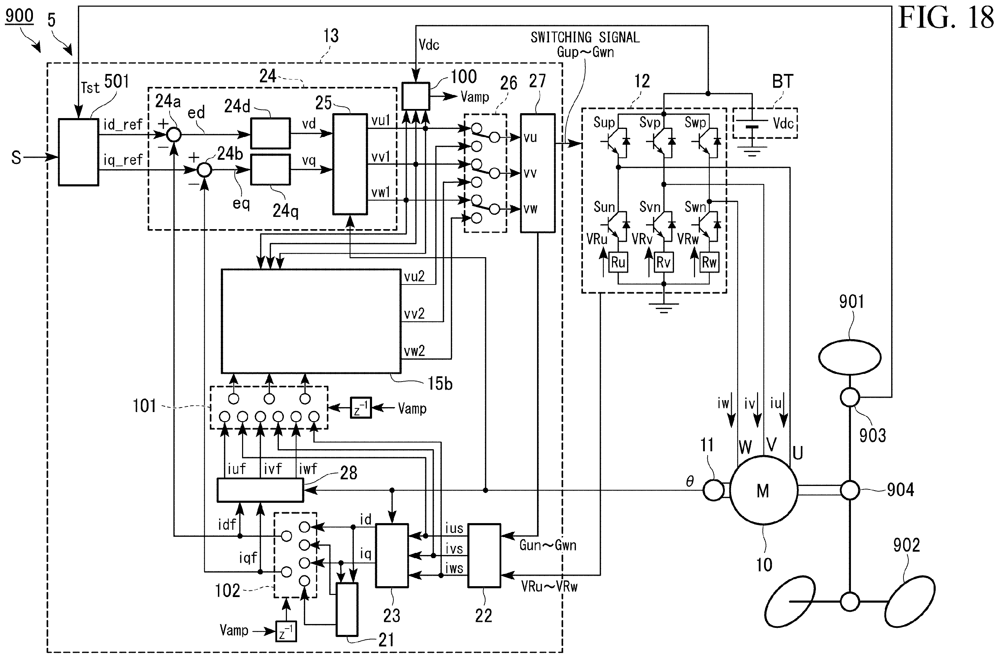

As illustrated in FIG. 18, an electric power steering device 900 according to the present embodiment includes a control device 5, a steering wheel 901, an AC motor 10, and a torque detector 903. The electric power steering device 900 is mounted in a vehicle. The steering wheel 901 is operated by a driver. Front wheels 902 of the vehicle are driven by operating the steering wheel 901. The basic configuration of the control device 5 is the same as that of the control device 1 according to the first embodiment, thus detailed descriptions thereof are omitted, and only main differences are described.

The torque detector 903 detects a steering torque Tst of the steering wheel 901 from the driver and outputs the detection result to the control device 5. A driving force of the AC motor 10 is transmitted to the front wheels 902 via a driving force transmission mechanism 904. The electric power steering device 900 assists with the driver's steering of the vehicle using the driving force generated from the AC motor 10 as an assist torque in steering of the vehicle.

The control device 5 includes a current command value calculator 501. The steering torque Tst, a traveling speed S of the vehicle, and the like are input to the current command value calculator 501. The current command value calculator 501 calculates a torque current command value iq_ref and a weak-field current command value id_ref based on the inputs. Vibration reduction control, viscosity compensation control, inertia compensation control, and the like which are known may be combined and used in calculation in the current command value calculator 501.

A brushless motor, a permanent magnet synchronous motor, or the like is used as the AC motor 10 for the electric power steering device 900. A resonance period Tr in a frame of the AC motor 10, a power pack into which the AC motor 10, the inverter 12, and the like are integrated, and the whole electric power steering device 900 is, for example, equal to or greater than 200 $\mu$s and equal to or less than 500 $\mu$s. That is, the resonance frequency fr of the structure may be equal to or greater than 2 kHz and equal to or less than 5 kHz. The resonance period Tr may be more preferably equal to or greater than 300 $\mu$s and equal to or less than 400 $\mu$s. That is, the resonance frequency fr may be equal to or greater than 2.5 kHz and equal to or less than 3.3 kHz. A current control response (a cutoff frequency) of the AC motor 10 is, for example, equal to or greater than 100 Hz and equal to or less than 1250 Hz or equal to or greater than 200 Hz and equal to or less than 800 Hz. The period Tc of the triangular carrier wave C is equal to or greater than 50 $\mu$s and equal to or less than 60 $\mu$s.

With the control devices 1 to 5 according to the first to fifth embodiments and the electric power steering device 900, when the aforementioned resonance period Tr or the like is set, it is possible to accurately remove a resonance frequency component included in a detected current. The configuration according to the present disclosure can be suitably applied to a vehicle in which a sense of steering with high quality is required, a vehicle in which silence is required when a driver steers the steering wheel 901 at a high speed (the AC motor 10 rotates at a high speed), or the like.

While the first to fifth embodiments have been described above, the present disclosure is not limited to the aforementioned embodiments, and may be freely modified without departing from the scope of the present disclosure. The first to fifth embodiments may also be appropriately combined. For example, techniques described in the first to fourth embodiments may be applied to the electric power steering device 900 described in the fifth embodiment. Alternatively, the control devices 1 to 5 may be applied to control of an AC motor 10 other than an electric power steering device.

The constituents of the AC motor control devices 1 to 5 and the electric power steering device 900 include a computer system therein. The processes of the constituents of the AC motor control devices 1 to 5 and the electric power steering device 900 may be performed by recording programs for realizing the functions of the constituents of the AC motor control devices 1 to 5 and the electric power steering device 900 on a computer-readable recording medium and causing the computer systems to read and execute the programs recorded on the recording medium. Here, "causing the computer system to read and execute the programs recorded on the recording medium" includes installing the programs in the computer systems. A "computer system" mentioned herein includes an OS and hardware such as peripherals.

The "computer system" may include a plurality of computer systems which are connected to each other via a network including a communication line such as the internet, a WAN, a LAN, or a dedicated line. The "computer-readable recording medium" is a portable medium such as a flexible disk, a magneto-optical disc, a ROM, or a CD-ROM or a storage device such as a hard disk incorporated into a computer system. The recording medium storing programs in this way may be a non-transitory recording medium such as a CD-ROM.

The recording medium includes a recording medium which is provided inside or outside to be accessed by a transmission server for transmitting the corresponding programs. A program may be divided into a plurality of pieces and the plurality of pieces of the program are downloaded at different timings and are then assembled into the corresponding constituents of the AC motor control devices 1 to 5 and the electric power steering device 900, or delivery servers for delivering the plurality of pieces of the program may be different. The "computer-readable recording medium" includes a medium that holds a program for a predetermined time such as a volatile memory (a RAM) in a computer system serving as a server or a client when the program is transmitted via a network. The program may be a program for realizing some of the aforementioned functions. The program may be a so-called differential file (a differential program) that can realize the aforementioned functions in combination with another program stored in advance in the computer system.

Reference Signs List

1 to 5... Control Device, 10... AC Motor, 12... Inverter, 12u, 12v, 12w... Current Supply Line, 15, 15b... Second Controller, 21... Two-Axis Current Filter, 22... Current Detector, 23... First Coordinate Converter, 24... First Controller, 28... Second Coordinate Converter, 401... Weighted Average Processing Unit, 900... Electric Power Steering Device

**Claims**

1. An AC motor control device comprising:

a current detector that detects three-phase currents that are supplied to an AC motor;
a first coordinate converter that converts pre-conversion detected currents, which are detection results from the current detector, to two-axis detected currents that are currents on two rotation axes;
a two-axis current filter that reduces a noise component of the two-axis detected currents;
a second coordinate converter that converts post-filtering two-axis currents, which are two-axis detected currents from which the noise component is reduced by the two-axis current filter, to post-filtering three-phase currents on a stationary coordinate system;
a first controller that generates first three-phase voltage commands, based on the two-axis detected currents, or the post-filtering two-axis currents;
a second controller that generates second three-phase voltage commands, based on the post-filtering three-phase currents; and
an inverter that applies a voltage to the AC motor, based on the first three-phase voltage commands and the second three-phase voltage commands.

2. The AC motor control device according to claim 1, wherein the two-axis current filter calculates the post-filtering two-axis currents using the previous two-axis detected currents, and
wherein the two-axis current filter performs an operation using the newest two-axis detected currents as the previous two-axis detected currents, immediately after the AC motor control device has started.

3. The AC motor control device according to claim 1, wherein the first three-phase voltage commands are generated based on the post-filtering two-axis currents, and the second three-phase voltage commands are generated based on the post-filtering three-phase currents, when an amplitude-correlated physical quantity that is correlated with a voltage amplitude of the first three-phase voltage commands, or a voltage amplitude of the second three-phase voltage commands is equal to or greater than a physical threshold value, and
wherein the first three-phase voltage commands are generated based on the two-axis detected currents, and the second three-phase voltage commands are generated based on the pre-conversion detected currents, when the amplitude-correlated physical quantity is less than the physical threshold value.

4. The AC motor control device according to claim 3, wherein the two-axis current filter calculates the post-filtering two-axis currents using the previous two-axis detected currents, and
wherein the two-axis current filter performs an operation using the newest two-axis detected currents as the previous two-axis detected currents, when a first state in which the amplitude-correlated physical quantity is less than the physical threshold value is switched to a second state in which the amplitude-correlated physical quantity is equal to or greater than the physical threshold value.

5. The AC motor control device according to claim 3 or 4, further comprising a weighted average processing element,

wherein the two-axis current filter performs an operation when a previous value of the amplitude-correlated physical quantity is greater than a second physical threshold value that is less than the physical threshold value,
wherein the weighted average processing element performs weighted average processing on the two-axis detected currents and the post-filtering two-axis currents, when the previous value to the amplitude-correlated physical quantity is present between the second physical threshold value and the physical threshold value, and
wherein the weighted average processing element increases a proportion of the post-filtering two-axis currents as the amplitude-correlated physical quantity increases, when the weighted average processing is performed.

6. The AC motor control device according to any one of claims 1 to 5, wherein the second controller calculates the second three-phase voltage commands using a value obtained by multiplying a current difference in the stationary coordinate system by a proportional gain.

7. The AC motor control device according to any one of claims 1 to 6, wherein the inverter includes current supply lines of currents supplied to the AC motor, and shunt resistors connected in series to the current supply lines,

wherein the current detector detects the pre-conversion detected currents based on end-to-end voltages of the shunt resistors, and

wherein a physical threshold value is determined based on a period of a triangular carrier wave, and a time threshold value.

8. The AC motor control device according to any one of claims 1 to 7, wherein the two-axis current filter is a notch filter for reducing a mechanical resonance frequency of the AC motor, or a low-pass filter of which a cutoff frequency is equal to or less than the mechanical resonance frequency.

9. An electric power steering device comprising:

the AC motor control device according to any one of claims 1 to 8; and
the AC motor that generates an assist torque in steering of a vehicle.

# FIG. 1

EP 4 611 250 A1

FIG. 2

# FIG. 3

FIG. 4

EP 4 611 250 A1

FIG. 5

FIG. 6

# FIG. 7

| TIME | 0 | $\Delta T$ | $2\Delta T$ | $3\Delta T$ | $4\Delta T$ | $5\Delta T$ | $6\Delta T$ | $7\Delta T$ | $8\Delta T$ | $9\Delta T$ |
|---|---|---|---|---|---|---|---|---|---|---|
| FIRST CONTROLLER 24 | EXECUTION | | EXECUTION | | EXECUTION | | EXECUTION | | EXECUTION | |
| SECOND CONTROLLER 15 | | EXECUTION | | EXECUTION | | EXECUTION | | EXECUTION | | EXECUTION |
| FILTER 21 | EXECUTION | EXECUTION | EXECUTION | EXECUTION | EXECUTION | EXECUTION | EXECUTION | EXECUTION | EXECUTION | EXECUTION |
| SELECTOR 26 | FIRST THREE-PHASE VOLTAGE COMMANDS | SECOND THREE-PHASE VOLTAGE COMMANDS | FIRST THREE-PHASE VOLTAGE COMMANDS | SECOND THREE-PHASE VOLTAGE COMMANDS | FIRST THREE-PHASE VOLTAGE COMMANDS | SECOND THREE-PHASE VOLTAGE COMMANDS | FIRST THREE-PHASE VOLTAGE COMMANDS | SECOND THREE-PHASE VOLTAGE COMMANDS | FIRST THREE-PHASE VOLTAGE COMMANDS | SECOND THREE-PHASE VOLTAGE COMMANDS |

# FIG. 8

| TIME | 0 | ΔT | 2ΔT | 3ΔT | 4ΔT | 5ΔT | 6ΔT | 7ΔT | 8ΔT | 9ΔT |
|---|---|---|---|---|---|---|---|---|---|---|
| FIRST CONTROLLER 24 | EXECUTION | | | EXECUTION | | | EXECUTION | | | EXECUTION |
| SECOND CONTROLLER 15 | | EXECUTION | EXECUTION | | EXECUTION | EXECUTION | | EXECUTION | EXECUTION | |
| FILTER 21 | EXECUTION | EXECUTION | EXECUTION | EXECUTION | EXECUTION | EXECUTION | EXECUTION | EXECUTION | EXECUTION | EXECUTION |
| SELECTOR 26 | FIRST THREE-PHASE VOLTAGE COMMANDS | SECOND THREE-PHASE VOLTAGE COMMANDS | SECOND THREE-PHASE VOLTAGE COMMANDS | FIRST THREE-PHASE VOLTAGE COMMANDS | SECOND THREE-PHASE VOLTAGE COMMANDS | SECOND THREE-PHASE VOLTAGE COMMANDS | FIRST THREE-PHASE VOLTAGE COMMANDS | SECOND THREE-PHASE VOLTAGE COMMANDS | SECOND THREE-PHASE VOLTAGE COMMANDS | FIRST THREE-PHASE VOLTAGE COMMANDS |

# FIG. 9

| TIME | 0 | $\Delta$T | 2$\Delta$T | 3$\Delta$T | 4$\Delta$T | 5$\Delta$T | 6$\Delta$T | 7$\Delta$T | 8$\Delta$T | 9$\Delta$T |
|---|---|---|---|---|---|---|---|---|---|---|
| FIRST CONTROLLER 24 | EXECUTION | | | | EXECUTION | | | | EXECUTION | |
| SECOND CONTROLLER 15 | | EXECUTION | EXECUTION | EXECUTION | | EXECUTION | EXECUTION | EXECUTION | | EXECUTION |
| FILTER 21 | EXECUTION | EXECUTION | EXECUTION | EXECUTION | EXECUTION | EXECUTION | EXECUTION | EXECUTION | EXECUTION | EXECUTION |
| SELECTOR 26 | FIRST THREE-PHASE VOLTAGE COMMANDS | SECOND THREE-PHASE VOLTAGE COMMANDS | SECOND THREE-PHASE VOLTAGE COMMANDS | SECOND THREE-PHASE VOLTAGE COMMANDS | FIRST THREE-PHASE VOLTAGE COMMANDS | SECOND THREE-PHASE VOLTAGE COMMANDS | SECOND THREE-PHASE VOLTAGE COMMANDS | SECOND THREE-PHASE VOLTAGE COMMANDS | FIRST THREE-PHASE VOLTAGE COMMANDS | SECOND THREE-PHASE VOLTAGE COMMANDS |

FIG. 10

PEAK NEAR 2500 Hz

10dB

0    1000   2000   3000   4000   5000   6000   7000   8000   9000  10000

FREQUENCY [Hz]

FIG. 11

CURRENT WAVEFORM(BASIC WAVE(50Hz))

CURRENT WAVEFORM(BASIC WAVE(250Hz))

(a1)

(a2)

(a3)

(b1)

(b2)

(b3)

20ms

5ms

EP 4 611 250 A1

FIG. 12

FIG. 13

FIG. 14

FIG. 15

RINGING OCCURS IN SEVERAL $\mu$s IMMEDIATELY AFTER Gxn
IS TURNED ON (IMMEDIATELY AFTER 0 IS SWITCHED TO 1),
AND CORRECT CURRENT CANNOT BE ACQUIRED
FROM END-TO-END VOLTAGE

FIG. 16

EP 4 611 250 A1

FIG. 17

FIG. 18

## INTERNATIONAL SEARCH REPORT

| International application No. |
| --- |
| **PCT/JP2022/040280** |

**A. CLASSIFICATION OF SUBJECT MATTER**

$H02P\ 21/22(2016.01)i$

FI: H02P21/22

According to International Patent Classification (IPC) or to both national classification and IPC

**B. FIELDS SEARCHED**

Minimum documentation searched (classification system followed by classification symbols)

H02P21/22

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2012-105402 A (DENSO CORP.) 31 May 2012 (2012-05-31)<br>paragraphs [0026]-[0047], fig. 1-6 | 1-9 |
| A | JP 2014-150644 A (FUJITSU GENERAL LTD.) 21 August 2014 (2014-08-21)<br>paragraphs [0059]-[0076], fig. 1-3 | 1-9 |
| A | WO 2014/128887 A1 (MITSUBISHI ELECTRIC CORP.) 28 August 2014 (2014-08-28)<br>paragraph [0060], fig. 5 | 1-9 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **15 December 2022** | **10 January 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/040280**

| Patent document cited in search report | | | Publication date (day/month/year) | Patent family member(s) | Publication date (day/month/year) |
|---|---|---|---|---|---|
| JP | 2012-105402 | A | 31 May 2012 | (Family: none) | |
| JP | 2014-150644 | A | 21 August 2014 | (Family: none) | |
| WO | 2014/128887 | A1 | 28 August 2014 | US    2015/0333682    A1<br>paragraph [0069], fig. 5<br>CN    105027421    A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5178768 B
- WO 2021144867 A